(19) Europäisches Patentamt
European Patent Office
Office européen des brevets

(11) EP 4 220 799 A1

(12) EUROPEAN PATENT APPLICATION
published in accordance with Art. 153(4) EPC

(43) Date of publication:
02.08.2023 Bulletin 2023/31

(21) Application number: 20957091.0

(22) Date of filing: 15.10.2020

(51) International Patent Classification (IPC):
*H01M 10/0525* (2010.01) *H01M 4/13* (2010.01)
*H01M 10/0567* (2010.01) *H01M 10/42* (2006.01)

(52) Cooperative Patent Classification (CPC):
**H01M 4/13; H01M 10/0525; H01M 10/0567; H01M 10/42;** Y02E 60/10

(86) International application number:
**PCT/CN2020/121055**

(87) International publication number:
**WO 2022/077311 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Zhangwan Town, Jiaocheng District**
**Ningde City**
**Fujian 352100 (CN)**

(72) Inventors:
- **WANG, Kefei**
**Ningde City, Fujian 352100 (CN)**
- **HAN, Dongdong**
**Ningde City, Fujian 352100 (CN)**
- **GUO, Jun**
**Ningde City, Fujian 352100 (CN)**
- **LIU, Shengqi**
**Ningde City, Fujian 352100 (CN)**

(74) Representative: **Klunker IP Patentanwälte PartG mbB**
**Destouchesstraße 68**
**80796 München (DE)**

# (54) ELECTROCHEMICAL DEVICE AND ELECTRONIC DEVICE

(57) An electrochemical apparatus and an electronic apparatus are provided. The electrochemical apparatus includes an electrode and an electrolyte. The electrode includes a current collector, an intermediate layer disposed on the current collector, and an active material layer disposed on the intermediate layer. The intermediate layer has a specific area ratio to the active material layer. The electrolyte includes a sulfur-oxygen double bond-containing compound. The electrochemical apparatus has improved direct current internal resistance and safety performance.

EP 4 220 799 A1

## Description

### TECHNICAL FIELD

This application relates to the field of energy storage, specifically to an electrochemical apparatus and an electronic apparatus, and in particular to a lithium-ion battery.

### BACKGROUND

With the development of technologies and increasing demands for mobile apparatuses, people impose increasing demands on electrochemical apparatuses (for example, lithium-ion batteries). In the pursuit of long endurance, higher requirements are imposed on the performance of lithium-ion batteries, especially the safety performance of the lithium-ion batteries.

Lithium-ion batteries generally have the following disadvantages or problems: the batteries have relatively large internal resistance and small current allowed for charging and discharging, resulting in long charging time (for example, at least 3.5 hours for trickle charging, and at least 30 minutes for fast charging). When a lithium-ion battery is charged and discharged at a high rate, a large amount of heat is generated due to internal resistance of the battery. Due to the lack of effective means for uniform heat dissipation of lithium-ion batteries, lithium-ion batteries will be locally overheated, which not only accelerates the aging of lithium-ion batteries, leads to the deterioration of battery capacity and power performance, but also causes potential safety hazards of lithium-ion batteries, for example, swelling, deformation, and even explosion.

In view of this, it is necessary to provide an electrochemical apparatus and an electronic apparatus that have improved performance.

### SUMMARY

Some embodiments of this application provide an electrochemical apparatus and an electronic apparatus that have improved direct current internal resistance and safety performance, so as to resolve at least one problem existing in the related art to at least some extent.

According to an aspect of this application, this application provides an electrochemical apparatus, including an electrode and an electrolyte, where the electrode includes a current collector, an intermediate layer disposed on the current collector, and an active material layer disposed on the intermediate layer, an area ratio A of the intermediate layer to the active material layer falls in the range of 0.9 to 1.1, and the electrolyte includes a sulfur-oxygen double bond-containing compound.

According to some embodiments of this application, the intermediate layer includes a conductive material, and an average particle size of the conductive material is less than 1 μm.

According to some embodiments of this application, the conductive material includes at least one of carbon black, carbon fiber, graphene, or carbon nanotube.

According to some embodiments of this application, a specific surface area of the conductive material is X $m^2/g$, and X falls in the range of 20 to 300.

According to some embodiments of this application, based on weight of the electrolyte, a percentage of the sulfur-oxygen double bond-containing compound is Y%, and Y falls in the range of 0.01 to 10.

According to some embodiments of this application, A and Y satisfy $0.009 \leq A \times Y \leq 6$.

According to some embodiments of this application, X and Y satisfy $0.2 \leq X \times Y \leq 200$.

According to some embodiments of this application, the sulfur-oxygen double bond-containing compound includes at least one of the following compounds: cyclic sulfate, chain sulfate, chain sulfonate, cyclic sulfonate, chain sulfite, or cyclic sulfite.

According to some embodiments of this application, the sulfur-oxygen double bond-containing compound includes a compound of formula 1:

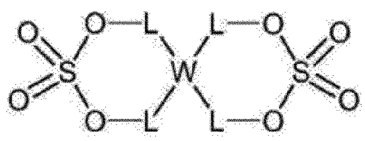

formula 1

where

W is selected from

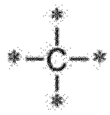 , 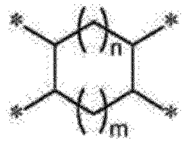 , 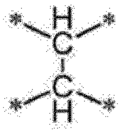 ,

or

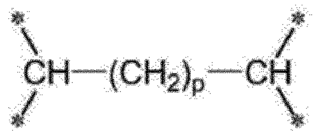 ;

L is selected from a single bond or methylene, and two Ls in a same ring structure are not single bonds at the same time;
m is 1, 2, 3, or 4.
n is 0, 1, or 2; and
p is 0, 1, 2, 3, 4, 5, or 6.

According to some embodiments of this application, the compound of formula 1 includes at least one of the following:

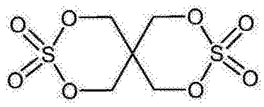
formula 1-1,

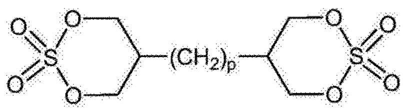
formula 1-2,

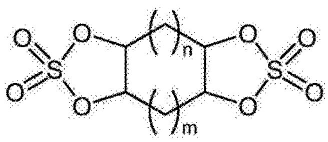
formula 1-3,

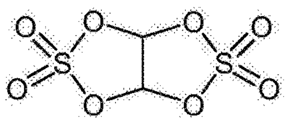
formula 1-4,

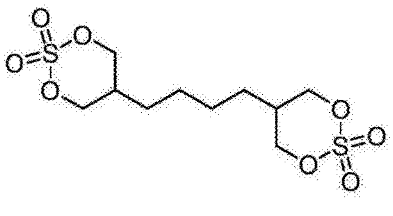
formula 1-5,

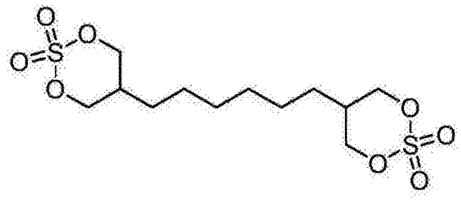

formula 1-6,

or

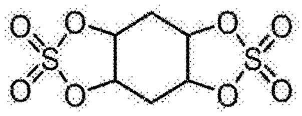

formula 1-7.

According to some embodiments of this application, the electrolyte further includes at least one of the following compounds:

(a) propionate;
(b) organic compound having the cyano group
(c) lithium difluorophosphate; and
(d) compound of formula 2:

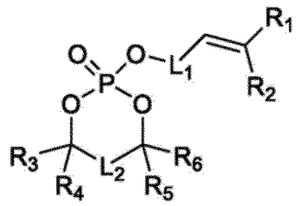

formula 2

where

$R^1$, $R^2$, $R^3$, $R^4$, $R^5$, and $R^6$ each are independently hydrogen or $C_1$-$C_{10}$ alkyl group; and
$L_1$ and $L_2$ each are independently $-(CR^7R^8)_n-$;
$R^7$ and $R^8$ each are independently hydrogen or $C_1$-$C_{10}$ alkyl group; and n is 1, 2, or 3.

According to some embodiments of this application, the compound of formula 2 includes at least one of the following compounds:

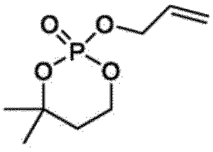

formula 2-1,

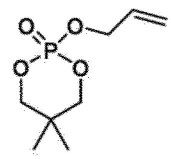

formula 2-2,

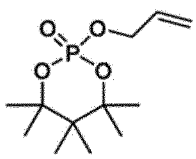

formula 2-3,

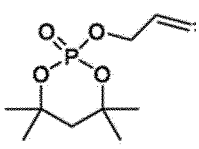

formula 2-4,

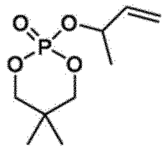 formula 2-5, or 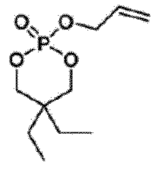 formula 2-6.

According to some embodiments of this application, based on weight of the electrolyte, a percentage of the propionate is a%, and a falls in the range of 10 to 60.

According to some embodiments of this application, based on weight of the electrolyte, a percentage of the lithium difluorophosphate is b%, and b falls in the range of 0.01 to 2.

According to some embodiments of this application, Y and b satisfy $0.01 \leq Y/b \leq 100$.

According to another aspect of this application, this application provides an electronic apparatus, including the electrochemical apparatus according to this application.

Additional aspects and advantages of some embodiments of this application are partly described and presented in subsequent descriptions, or explained by implementation of some embodiments of this application.

## DESCRIPTION OF EMBODIMENTS

Some embodiments of this application are described in detail below. Some embodiments of this application should not be construed as limitations on the application.

Unless otherwise expressly indicated, the following terms used in this specification have the meanings described below.

In the specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements. The term "at least one type of" has the same meaning as the term "at least one of".

As used in this specification, the term "alkyl group" is intended to be a linear saturated hydrocarbon structure having 1 to 20 carbon atoms. The term "alkyl group" is also intended to be a branched or cyclic hydrocarbon structure having 3 to 20 carbon atoms. References to an alkyl group with a specific carbon number are intended to cover all geometric isomers with the specific carbon number. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl group include, but are not limited to, a methyl group, an ethyl group, an n-propyl group, an isopropyl group, an cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, a norbornyl group, and the like.

As used in this specification, the term "halogenated" means that hydrogen atoms in a group are partially or entirely substituted with halogen atoms (for example, fluorine, chlorine, bromine, or iodine).

As electrochemical apparatuses (for example, lithium-ion batteries) are widely applied, safety performance of the electrochemical apparatuses attracts much more attention. The potential safety hazards of electrochemical apparatuses are mainly caused by overheating inside the apparatuses. When a lithium-ion battery is charged and discharged at a high rate, a large amount of heat generated inside it cannot be dissipated evenly, which will accelerate the aging of the lithium-ion battery, and cause potential safety hazards of the lithium-ion battery, for example, swelling, deformation, and even explosion.

This application aims to resolve the above-mentioned problems by providing an intermediate layer between an electrode current collector and an active material layer, making the intermediate layer have a specific area ratio to the active material layer, and using an electrolyte including a sulfur-oxygen double bond-containing compound in combination.

In an embodiment, this application provides an electrochemical apparatus, including an electrode and an electrolyte as described below.

### I. Electrode

A characteristic of the electrochemical apparatus of this application lies in that the electrode includes a current

collector, an intermediate layer disposed on the current collector, and an active material layer disposed on the intermediate layer, and an area ratio A of the intermediate layer to the active material layer falls in the range of 0.9 to 1.1. In some embodiments, A is 0.9, 1.0, or 1.1, or falls in a range formed by any two of the foregoing values. The intermediate layer can significantly reduce the direct current internal resistance and thickness swelling rate of the electrochemical apparatus and enhance the safety of the electrochemical apparatus.

In some embodiments of this application, the intermediate layer includes a conductive material, and an average particle size of the conductive material is less than 1 μm. In some embodiments, an average particle size of the conductive material is less than 0.8 μm. In some embodiments, an average particle size of the conductive material is less than 0.7 μm. In some embodiments, an average particle size of the conductive material is less than 0.5 μm. In some embodiments, an average particle size of the conductive material is less than 0.2 μm. In some embodiments, an average particle size of the conductive material is less than 0.1 μm. When the average particle size of the conductive material falls in the preceding range, not only the conductivity at the interface between a negative electrode current collector and a negative electrode active material layer can be improved, but also the interface can be blurred, thereby improving the adhesion therebetween. The conductive material is usually aggregated in a direction parallel to a surface of the negative electrode current collector, and is hardly stacked in a direction perpendicular to the negative electrode current collector. In this case, when the average particle size of the conductive material is less than the average particle size of the negative electrode active material, the interface containing the conductive material between the negative electrode current collector and the negative electrode active material layer is relatively thin, which can significantly reduce the direct current internal resistance and thickness swelling rate of the electrochemical apparatus, and improve the safety of the electrochemical apparatus.

In some embodiments, the conductive material includes at least one of carbon black, carbon fiber, graphene, or carbon nanotube. In some embodiments, the carbon black includes at least one of acetylene black, furnace black, or Ketjen black.

In some embodiments, a specific surface area of the conductive material is X $m^2/g$, and X falls in the range of 20 to 300. In some embodiments, X falls in the range of 50 to 250. In some embodiments, X falls in the range of 80 to 200. In some embodiments, X falls in the range of 100 to 150. In some embodiments, X is 20, 50, 80, 100, 120, 150, 180, 200, 250, 280, or 300, or falls in a range formed by any two of the foregoing values. When the specific surface area of the conductive material falls in the preceding range, it is helpful to further reduce the direct current internal resistance and the thickness swelling rate of the electrochemical apparatus, and improve the safety of the electrochemical apparatus.

The specific surface area (BET) of the conductive material can be measured by using the following method: being measured using a surface area meter (for example, a full-automatic surface area measuring apparatus manufactured by Ohkura Riken Co., Ltd.) according to single point BET nitrogen adsorption using the dynamic flow method by predrying a sample for 30 minutes at 150°C in the presenece of flowing nitrogen followed by using a nitrogen-helium mixed gas whose value of the relative pressure of nitrogen to atmospheric pressure is accurately adjusted to 0.3.

The electrode described herein may be a positive electrode or a negative electrode.

## Positive electrode

The positive electrode includes a positive electrode current collector and a positive electrode active material layer disposed on one or two surfaces of the positive electrode current collector.

### 1. Positive electrode active material layer

The positive electrode active material layer includes a positive electrode active material. The positive electrode active material layer may be one or more layers. Each of the plurality of layers of the positive electrode active materials may contain the same or different positive electrode active materials. The positive electrode active material is any material capable of reversibly intercalating and deintercalating metal ions such as lithium ions.

The type of the positive electrode active material is not particularly limited, provided that metal ions (for example, lithium ions) can be electrochemically absorbed and released. In some embodiments, the positive electrode active material is a material that contains lithium and at least one transition metal. Examples of the positive electrode active material may include, but are not limited to, lithium transition metal composite oxides and lithium-containing transition metal phosphate compounds.

In some embodiments, transition metals in the lithium transition metal composite oxides include V, Ti, Cr, Mn, Fe, Co, Ni, Cu, and the like. In some embodiments, the lithium transition metal composite oxides include lithium-cobalt composite oxides such as $LiCoO_2$, a lihtium-nickel composite oxides such as $LiNiO_2$, a lithium-manganese composite oxides such as $LiMnO_2$, $LiMn_2O_4$, and $Li_2MnO_4$, and a lithium-nickel-manganese cobalt composite oxides such as $LiNi_{1/3}Mn_{1/3}Co_{1/3}O_2$, and $LiNi_{0.5}Mn_{0.3}Co_{0.2}O_2$; where some of transition metal atoms serving as main parts of these lithium transition metal composite oxides are substituted with other elements such as Na, K, B, F, Al, Ti, V, Cr, Mn, Fe,

Co, Li, Ni, Cu, Zn, Mg, Ga, Zr, Si, Nb, Mo, Sn, and W. Examples of lithium transition metal composite oxides may include, but are not limited to, $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiNi_{0.45}Co_{0.10}Al_{0.45}O_2$, $LiMn_{1.8}Al_{0.2}O_4$, $LiMn_{1.5}Ni_{0.5}O_4$, and the like. Examples of a combination of lithium transition metal composite oxides include, but are not limited to, a combination of $LiCoO_2$ and $LiMn_2O_4$, where part of Mn in $LiMn_2O_4$ may be substituted with a transition metal (for example, $LiNi_{0.33}Co_{0.33}Mn_{0.33}O_2$) and part of Co in $LiCoO_2$ may be substituted with a transition metal.

In some embodiments, transition metals in the lithium-containing transition metal phosphate compounds include V, Ti, Cr, Mn, Fe, Co, Ni, Cu, and the like. In some embodiments, the lithium-containing transition metal phosphate compounds include iron phosphates such as $LiFePO_4$, $Li_3Fe_2(PO_4)_3$, and $LiFeP_2O_7$, and cobalt phosphates such as $LiCoPO_4$, where some of transition metal atoms serving as main parts of these lithium transition metal phosphate compounds are substituted with other elements such as Al, Ti, V, Cr, Mn, Fe, Co, Li, Ni, Cu, Zn, Mg, Ga, Zr, Nb, and Si.

In some embodiments, the positive electrode active material includes lithium phosphates, which can improve the continuous charging property of the electrochemical apparatus. The use of lithium phosphates is not limited. In some embodiments, the positive electrode active material and lithium phosphates are used in combination. In some embodiments, the percentage of the lithium phosphates is higher than 0.1%, higher than 0.3%, or higher than 0.5% relative to the weights of the positive electrode active material and lithium phosphates. In some embodiments, the percentage of the lithium phosphates is lower than 10%, lower than 8%, or lower than 5% relative to the weights of the positive electrode active material and lithium phosphates. In some embodiments, the percentage of the lithium phosphates falls in a range between any two of the foregoing values.

Surface coating

Materials with a composition different from that of the positive electrode active material may be adhered onto the surface of the positive electrode active material. Examples of the surface adhesion materials include, but are not limited to, oxides such as aluminum oxide, silicon dioxide, titanium dioxide, zirconium oxide, magnesium oxide, calcium oxide, boron oxide, antimony oxide, and bismuth oxide; sulphates such as lithium sulfate, sodium sulfate, potassium sulfate, magnesium sulfate, calcium sulfate, and aluminum sulfate; carbonates such as lithium carbonate, calcium carbonate, and magnesium carbonate; carbon; and so on.

These surface adhesion materials may be adhered to the surface of the positive electrode active material by using the following methods: a method of dissolving or suspending the surface adhesion material in the solvent, making the resulting solution infiltrate into the positive electrode active material, and performing drying on the infiltrated mixture; a method of dissolving or suspending a surface adhesion material precursor in the solvent, making the resulting solution infiltrate into the positive electrode active material, and performing heating or the like on the infiltrated mixture to implement reaction of the surface adhesion material; a method of adding the surface adhesion material to a positive electrode active material precursor and performing sintering on the mixture simultaneously. In a case of carbon adhesion, a method for mechanical adhesion of a carbon material (for example, activated carbon) may also be used.

In some embodiments, based on the weight of the positive electrode active material layer, the percentage of the surface adhesion material is greater than 0.1 ppm, greater than 1 ppm, or greater than 10 ppm. In some embodiments, based on the weight of the positive electrode active material layer, the percentage of the surface adhesion material is less than 10%, less than 5%, or less than 2%. In some embodiments, based on the weight of the positive electrode active material layer, the percentage of the surface adhesion material falls in a range between any two of the foregoing values.

Adhering a material to the surface of the positive electrode active material can suppress oxidation reaction of the electrolyte on the surface of the positive electrode active material and increase the service life of the electrochemical apparatus. An excessively small amount of material adhered to the surface cannot make the effect fully displayed while an excessively large amount of material adhered to the surface prevents intercalation and deintercalation of lithium ions to increase the resistance sometimes.

In this application, the materials with a composition different from that of the positive electrode active material that are adhered onto the surface of the positive electrode active material are also called "positive electrode active materials".

Shape

In some embodiments, the shapes of particles of the positive electrode active material include, but are not limited to, block, polyhedron, spherical, ellipsoidal, plate, needle, column, and the like. In some embodiments, the positive electrode active material particles include primary particles, secondary particles, or a combination thereof. In some embodiments, the primary particles may agglomerate to form the secondary particles.

Tap density

In some embodiments, the tap density of the positive electrode active material is greater than 0.5 g/cm$^3$, greater than 0.8 g/cm$^3$, or greater than 1.0 g/cm$^3$. When the tap density of the positive electrode active material falls in the preceding range, the amount of the dispersion medium, the amount of the conductive material, and the amount of the positive electrode binder that are required for forming the positive electrode active material layer can be suppressed, thereby ensuring a filling rate of the positive electrode active material and the capacity of the electrochemical apparatus. Using a composite oxide powder with a high tap density can form a positive electrode active material layer with a high density. Generally, a larger tap density indicates being more preferable, and there is no particular upper limit. In some embodiments, the tap density of the positive electrode active material is less than 4.0 g/cm$^3$, less than 3.7 g/cm$^3$, or less than 3.5 g/cm$^3$. When the tap density of the positive electrode active material has the upper limit as described above, a decrease in load characteristics can be suppressed.

The tap density of the positive electrode active material can be calculated in the following manner: placing 5 g to 10 g of the positive electrode active material powder into a 10 mL glass measuring cylinder and tapping 200 times at 20 mm stroke to obtain a powder filling density (tap density).

Median particle size (D50)

When the positive electrode active material particles are primary particles, the median particle size (D50) of the positive electrode active material particles is a primary particle size of the positive electrode active material particles. When the primary particles of the positive electrode active material particles agglomerate to form secondary particles, the median particle size (D50) of the positive electrode active material particles is a secondary particle size of the positive electrode active material particles.

In some embodiments, the median particle size (D50) of the positive electrode active material particles is greater than 0.3 μm, greater than 0.5 μm, greater than 0.8 μm, or greater than 1.0 μm. In some embodiments, the median particle size (D50) of the positive electrode active material particles is less than 30 μm, less than 27 μm, less than 25 μm, or less than 22 μm. In some embodiments, the median particle size (D50) of the positive electrode active material particles falls in a range between any two of the foregoing values. When the median particle size (D50) of the positive electrode active material particles falls in the preceding range, a positive electrode active material with a high tap density can be obtained, and performance degradation of the electrochemical apparatus can be suppressed. In addition, problems such as stripes can be prevented during preparation of the positive electrode of the electrochemical apparatus (that is, when the positive electrode active material, the conductive material, the binder, and the like are made into a slurry with a solvent and the slurry is applied in a thin-film form). Herein, more than two types of positive electrode active materials having different median particle sizes are mixed to further improve the filling property during preparation of the positive electrode.

The median particle size (D50) of the positive electrode active material particles can be measured by using a laser diffraction/scattering particle size distribution tester: when LA-920 manufactured by HORIBA is used as a particle size distribution tester, using a 0.1% sodium hexametaphosphate aqueous solution as a dispersion medium for testing, and measuring a result at a refractive index of 1.24 after ultrasonic dispersion for five minutes.

Average primary particle size

When the primary particles of the positive electrode active material particles agglomerate to form the secondary particles, in some embodiments, the average primary particle size of the positive electrode active material is greater than 0.05 μm, greater than 0.1 μm, or greater than 0.5 μm. In some embodiments, the average primary particle size of the positive electrode active material is less than 5 μm, less than 4 μm, less than 3 μm, or less than 2 μm. In some embodiments, the average primary particle size of the positive electrode active material falls in a range between any two of the foregoing values. When the average primary particle size of the positive electrode active material falls in the preceding range, the powder filling property and the specific surface area can be ensured, performance degradation of the battery can be suppressed, and moderate crystallinity can be implemented, thereby ensuring reversibility of charging and discharging of the electrochemical apparatus.

The average primary particle size of the positive electrode active material may be obtained by observing an image from a scanning electron microscope (SEM): in the SEM image magnified 10000 times, for any 50 primary particles, obtaining longest values of sections obtained on the left and right boundary lines of the primary particles relative to the horizontal straight line, and calculating an average value to obtain the average primary particle size.

Specific surface area (BET)

In some embodiments, the specific surface area (BET) of the positive electrode active material is greater than 0.1 $m^2/g$, greater than 0.2 $m^2/g$, or greater than 0.3 $m^2/g$. In some embodiments, the specific surface area (BET) of the positive electrode active material is less than 50 $m^2/g$, less than 40 $m^2/g$, or less than 30 $m^2/g$. In some embodiments, the specific surface area (BET) of the positive electrode active material falls in a range between any two of the foregoing values. When the specific surface area (BET) of the positive electrode active material falls in the preceding range, the performance of the electrochemical apparatus can be ensured, and the positive electrode active material can have a good coating property.

The specific surface area (BET) of the conductive material can be measured by using the following method: being measured using a surface area meter (for example, a full-automatic surface area measuring apparatus manufactured by Ohkura Riken Co., Ltd.) according to single point BET nitrogen adsorption using the dynamic flow method by predrying a sample for 30 minutes at 150°C in the presenece of flowing nitrogen followed by using a nitrogen-helium mixed gas whose value of the relative pressure of nitrogen to atmospheric pressure is accurately adjusted to 0.3.

Positive electrode conductive material

The type of positive electrode conductive material is not limited, and any known conductive material may be used. Examples of the positive electrode conductive material may include, but are not limited to, graphite such as natural graphite and artificial graphite; carbon black such as acetylene black; carbon materials including amorphous carbon such as acicular coke; carbon nanotube; graphene; and the like. The positive electrode conductive material may be used alone or in any combination.

In some embodiments, based on the weight of the positive electrode active material layer, the percentage of the positive electrode conductive material is higher than 0.01%, higher than 0.1%, or higher than 1%. In some embodiments, based on the weight of the positive electrode active material layer, the percentage of the positive electrode conductive material is lower than 10%, lower than 8%, or lower than 5%. When the percentage of the positive electrode conductive material falls in the preceding range, sufficient conductivity and the capacity of the electrochemical apparatus can be ensured.

Positive electrode binder

The type of the positive electrode binder used during preparation of the positive electrode active material layer is not particularly limited, and under the condition that the coating method is used, any material that can be dissolved or dispersed in a liquid medium used in the preparation of the electrode is acceptable. Examples of the positive electrode binder may include, but are not limited to, one or more of the following: a resin-based polymer such as polyethylene, polypropylene, polyethylene glycol terephthalate, polymethyl methacrylate, polyimide, aromatic polyamide, cellulose, or nitrocellulose; a rubber polymer such as styrene-butadiene rubber (SBR), isoprene rubber, polybutadiene rubber, fluorine rubber, acrylonitrile butadiene rubber (NBR), or ethylene·propylene rubber; styrene·butadiene styrene block copolymer or hydride thereof; a thermoplastic elastomeric polymer such as ethylene·propylene·diene terpolymer (EPDM), styrene·ethylene·butadiene·styrene copolymer, styrene·isoprene·styrene block copolymer or hydride thereof; a soft resinous polymer such as syndiotactic-1,2-polybutadiene, polyvinyl acetate, ethylene vinyl acetate copolymer, propylene·$\alpha$-olefin copolymer; a fluorine polymer such as polyvinylidene fluoride (PVDF), polytetrafluoroethylene, fluorinated polyvinylidene fluoride, polytetrafluoroethylene-ethylene copolymer; a polymer composition having ion conductivity of alkali metal ions (especially, lithium ion); and so on. The positive electrode binder may be used alone or in any combination.

In some embodiments, based on the weight of the positive electrode active material layer, the percentage of the positive electrode binder is higher than 0.1%, higher than 1%, or higher than 1.5%. In some embodiments, based on the weight of the positive electrode active material layer, the percentage of the positive electrode binder is lower than 10%, lower than 5%, lower than 4%, or lower than 3%. When the percentage of the positive electrode binder falls in the preceding range, the positive electrode can have good conductivity and sufficient mechanical strength, and the capacity of the electrochemical apparatus can be ensured.

Solvent

The type of the solvent used for forming the positive electrode slurry is not limited, provided that the solvent is capable of dissolving or dispersing the positive electrode active material, the conductive material, the positive electrode binder, and the thickener used as required. Examples of the solvent used to form the positive electrode slurry may include any of an aqueous solvent and an organic solvent. Examples of the aqueous medium may include, but are not limited to, water, a mixed medium of alcohol and water, and the like. Examples of the organic medium may include, but

are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine, and N,N-dimethylaminopropylamine; ethers such as diethyl ether, propylene oxide, and tetrahydrofuran (THF); amides such as N-methylpyrrolidone (NMP), dimethylformamide, and dimethylacetamide; aprotic polar solvents such as hexamethylphosphoramide and dimethyl sulfoxide; and so on.

### Thickener

The thickener is usually used to adjust viscosity of the slurry. Under the condition that aqueous medium is used, the thickener and styrene-butadiene rubber (SBR) emulsion may be used for making the slurry. The type of the thickener is not particularly limited, and examples of the thickener may include, but are not limited to, carboxymethyl cellulose, methyl cellulose, hydroxymethyl cellulose, ethyl cellulose, polyvinyl alcohol, oxidized starch, phosphorylated starch, casein, salt thereof, and the like. The thickener may be used alone or in any combination.

In some embodiments, based on the weight of the positive electrode active material layer, the percentage of the thickener is higher than 0.1%, higher than 0.2%, or higher than 0.3%. In some embodiments, based on the weight of the positive electrode active material layer, the percentage of the thickener is lower than 5%, lower than 3%, or lower than 2%. In some embodiments, based on the weight of the positive electrode active material layer, the percentage of the thickener falls in a range between any two of the foregoing values. When the percentage of the thickener falls in the preceding range, a good coating property of the positive electrode slurry can be ensured, and a decrease in the capacity of the electrochemical apparatus and an increase in the resistance can be suppressed.

### Percentage of the positive electrode active material

In some embodiments, based on the weight of the positive electrode active material layer, the percentage of the positive electrode active material is higher than 80%, higher than 82%, or higher than 84%. In some embodiments, based on the weight of the positive electrode active material layer, the percentage of the positive electrode active material is lower than 99% or lower than 98%. In some embodiments, based on the weight of the positive electrode active material layer, the percentage of the positive electrode active material falls in a range between any two of the foregoing values. When the percentage of the positive electrode active material falls in the preceding range, the electric capacity of the positive electrode active material in the positive electrode active material layer can be ensured while the strength of the positive electrode can be maintained.

### Density of the positive electrode active material layer

In order to increase the filling density of the positive electrode active material, the positive electrode active material layer obtained by coating and drying can be pressed by using a manual press, a roller, or the like. In some embodiments, the density of the positive electrode active material layer is greater than 1.5 $g/cm^3$, greater than 2 $g/cm^3$, or greater than 2.2 $g/cm^3$. In some embodiments, the density of the positive electrode active material layer is less than 5 $g/cm^3$, less than 4.5 $g/cm^3$, or less than 4 $g/cm^3$. In some embodiments, the density of the positive electrode active material layer falls in a range between any two of the foregoing values. When the density of the positive electrode active material layer falls in the preceding range, the electrochemical apparatus can have good charge/discharge performance and an increase in the resistance can be suppressed.

### Thickness of the positive electrode active material layer

The thickness of the positive electrode active material layer is the thickness of the positive electrode active material layer on either side of the positive electrode current collector. In some embodiments, the thickness of the positive electrode active material layer is greater than 10 μm or greater than 20 μm. In some embodiments, the thickness of the positive electrode active material layer is less than 500 μm or less than 450 μm.

### Method of manufacturing a positive electrode active material

The positive electrode active material may be manufactured by using a commonly used method for manufacturing an inorganic compound. In order to prepare a spherical or ellipsoidal positive electrode active material, the following preparation method may be used: dissolving or pulverizing and dispersing the raw material of transition metal in a solvent such as water; adjusting the pH while stirring; making and reclaiming spherical precursors; after drying as needed, adding Li sources such as LiOH, $Li_2CO_3$, and $LiNO_3$; and performing sintering at a high temperature to obtain the positive

electrode active material.

2. Positive electrode current collector

The type of positive electrode current collector is not particularly limited and may be any known material used as the positive electrode current collector. Examples of the positive electrode current collector may include, but are not limited to, metal materials such as aluminum, stainless steel, a nickel plating layer, titanium, and tantalum; and carbon materials such as a carbon cloth and carbon paper. In some embodiments, the positive electrode current collector is a metal material. In some embodiments, the positive electrode current collector is aluminum.

The form of the positive electrode current collector is not particularly limited. When the positive electrode current collector is a metal material, the positive electrode current collector may take forms, including but not limited to, a metal foil, a metal cylinder, a metal coil, a metal plate, a metal film, a sheet metal mesh, a punched metal, a foamed metal, and the like. When the positive electrode current collector is a carbon material, the form of the positive electrode current collector may include, but is not limited to, a carbon plate, a carbon film, a carbon cylinder, and the like. In some embodiments, the positive electrode current collector is a metal foil. In some embodiments, the metal foil is a mesh. The thickness of the metal foil is not particularly limited. In some embodiments, the thickness of the metal foil is greater than 1 μm, greater than 3 μm, or greater than 5 μm. In some embodiments, the thickness of the metal foil is less than 1 mm, less than 100 μm, or less than 50 μm. In some embodiments, the thickness of the metal foil falls in a range between any two of the foregoing values.

In order to reduce the electronic contact resistance of the positive electrode current collector and the positive electrode active material layer, the surface of the positive electrode current collector may include a conductive additive. Examples of the conductive additive may include, but are not limited to, carbon and precious metals such as gold, platinum, and silver.

A thickness ratio of the positive electrode active material layer to the positive electrode current collector is a thickness of one side of the positive electrode active material layer divided by the thickness of the positive electrode current collector, and its value is not particularly limited. In some embodiments, the thickness ratio is less than 50, less than 30, or less than 20. In some embodiments, the thickness ratio is greater than 0.5, greater than 0.8, or greater than 1. In some embodiments, the thickness ratio falls in a range between any two of the foregoing values. When the thickness ratio falls in the preceding range, heat dissipation of the positive electrode current collector during charging and discharging at high current density can be suppressed, and the capacity of the electrochemical apparatus can be ensured.

3. Method for preparing a positive electrode

The positive electrode may be prepared by forming, on a current collector, a positive electrode active material layer containing a positive electrode active material and a binder. The positive electrode using the positive electrode active material can be prepared by using a conventional method: performing dry mixing for the positive electrode active material, the binder, and the conductive material and the thickener that are to be used as required to form a sheet, and pressing the resulting sheet onto the positive electrode current collector; or dissolving or dispersing these materials in a liquid medium to make a slurry, and applying the slurry onto the positive electrode current collector, followed by drying, to form a positive electrode active material layer on the current collector. In this way, the positive electrode is obtained.

Negative electrode

The negative electrode includes a negative electrode current collector and a negativeelectrode active material layer disposed on one or two surfaces of the negative electrode current collector. The negative electrode active material layer contains a negative electrode active material. The negative electrode active material layer may be one or more layers, and each of the plurality of layers of the negative electrode active material may contain the same or different negative electrode active materials. The negative electrode active material is any material capable of reversibly intercalating and deintercalating metal ions such as lithium ions. In some embodiments, a rechargeable capacity of the negative electrode active material is greater than a discharge capacity of the positive electrode active material to prevent lithium metal from unexpectedly precipitating onto the negative electrode during charging.

As a current collector for holding the negative electrode active material, the negative electrode current collector may use any known current collector. Examples of the negative electrode current collector include, but are not limited to, metal materials such as aluminum, copper, nickel, stainless steel, and nickel plated steel. In some embodiments, the negative electrode current collector is copper.

In a case that the negative electrode current collector is a metal material, the negative electrode current collector may take forms, including but not limited to, a metal foil, a metal cylinder, a metal coil, a metal plate, a metal foil, a sheet metal mesh, a punched metal, a foamed metal, and the like. In some embodiments, the negative electrode current

collector is a metal film. In some embodiments, the negative electrode current collector is a copper foil. In some embodiments, the negative electrode current collector is a rolled copper foil based on a rolling method or an electrolytic copper foil based on an electrolytic method.

In some embodiments, a thickness of the negative electrode current collector is greater than 1 μm or greater than 5 μm. In some embodiments, the thickness of the negative electrode current collector is less than 100 μm or less than 50 μm. In some embodiments, the thickness of the negative electrode current collector falls in a range between any two of the foregoing values.

The negative electrode active material is not particularly limited, provided that it can reversibly absorb and release lithium ions. Examples of the negative electrode active material may include, but are not limited to, carbon materials such as natural graphite and artificial graphite; metals such as silicon (Si) and tin (Sn); oxides of metal elements such as Si and Sn; or the like. The negative electrode active material may be used alone or in any combination.

The negative electrode active material layer may further include a negative electrode binder. The negative electrode binder can improve binding between particles of the negative electrode active material and binding between the negative electrode active material and the current collector. The type of the negative electrode binder is not particularly limited, provided that its material is stable to the electrolyte or a solvent used in manufacturing of the electrode. In some embodiments, the negative electrode binder includes a resin binder. Examples of the resin binder include, but are not limited to, fluororesins, polyacrylonitrile (PAN), polyimide resins, acrylic resins, polyolefin resins, and the like. When an aqueous solvent is used to prepare a negative electrode mixture slurry, the negative electrode binder includes but is not limited to carboxymethyl cellulose (CMC) or its salt, styrene-butadiene rubber (SBR), polyacrylic acid (PAA) or its salt, polyvinyl alcohol, and the like.

The negative electrode may be prepared by using the following method: applying a negative electrode mixture slurry containing the negative electrode active material, the resin binder, and the like on the negative electrode current collector, and after drying, and performing calendering to form a negative electrode active material layer on two sides of the negative electrode current collector. In this way, the negative electrode is obtained.

II. Electrolyte

The electrolyte used in the electrochemical apparatus of this application includes an electrolytic salt and a solvent for dissolving the electrolytic salt. In some embodiments, the electrolyte used in the electrochemical apparatus of this application further includes an additive.

Another characteristic of the electrochemical apparatus of this application lies in that the electrolyte includes a sulfur-oxygen double bond-containing compound.

In some embodiments, the sulfur-oxygen double bond-containing compound includes at least one of the following compounds: cyclic sulfate, chain sulfate, chain sulfonate, cyclic sulfonate, chain sulfite, or cyclic sulfite.

In some embodiments, the cyclic sulfate may include, but is not limited to, one or more of the following: 1,2-ethylene glycol sulfate, 1,2-propanediol sulfate, 1,3-propanediol sulfate, 1,2-butanediol sulfate, 1,3-butanediol sulfate, 1,4-butanediol sulfate, 1,2-pentanediol sulfate, 1,3-pentanediol sulfate, 1,4-pentanediol sulfate, 1,5-pentanediol sulfate, and the like.

In some embodiments, the chain sulfate includes but is not limited to one or more of the following: dimethyl sulfate, ethyl methyl sulfate, diethyl sulfate, and the like.

In some embodiments, the chain sulfonate may include, but is not limited to, one or more of the following: fluorosulfonate such as methyl fluorosulfonate and ethyl fluorosulfonate, methyl methanesulfonate, ethyl methanesulfonate, butyl dimethanesulfonate, methyl 2-(methanesulfonyloxy) propionate, ethyl 2-(methanesulfonyloxy) propionate, and the like.

In some embodiments, the cyclic sulfonate may include, but is not limited to, one or more of the following: 1,3-propanesulfonate, 1-fluoro-1,3-propanesulfonate, 2-fluoro-1,3-propanesulfonate, 3-fluoro-1,3-propanesulfonate, 1-methyl-1,3-propanesulfonate, 2-methyl-1,3-propanesulfonate, 3-methyl-1,3-propanesulfonate, 1-propylene-1,3-sulfonate, 2-propylene-1,3-sulfonate, 1-fluoro-1-propylene-1,3-sulfonate, 2-fluoro-1-propylene-1,3-sulfonate, 3-fluoro-1-propylene-1,3-sulfonate, 1-fluoro-2-propylene-1,3-sulfonate, 2-fluoro-2-propylene-1,3-sulfonate, 3-fluoro-2-propylene-1,3-sulfonate, 1-methyl-1-propylene-1,3-sulfonate, 2-methyl-1-propylene-1,3-sulfonate, 3-methyl-1-propylene-1,3-sulfonate, 1-methyl-2-propylene-1,3-sulfonate, 2-methyl-2-propylene-1,3-sulfonate, 3-methyl-2-propylene-1,3-sulfonate, 1,4-butane sulfonate, 1,5-pentanesulfonate, methylene methanedisulfonate, ethylene methane disulfonate, and the like.

In some embodiments, the chain sulfite includes but is not limited to one or more of the following: dimethyl sulfate, ethyl methyl sulfate, diethyl sulfate, and the like.

In some embodiments, the cyclic sulfite may include, but is not limited to, one or more of the following: 1,2-ethylene glycol sulfite, 1,2-propanediol sulfite, 1,3-propanediol sulfite, 1,2-butanediol sulfite, 1,3-butanediol sulfite, 1,4-butanediol sulfite, 1,2-pentanediol sulfite, 1,3-pentanediol sulfite, 1,4-pentanediol sulfite, 1,5-pentanediol sulfite, and the like.

In some embodiments, the sulfur-oxygen double bond-containing compound includes a compound of formula 1:

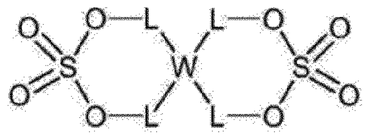

formula 1

where

W is selected from

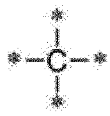

,

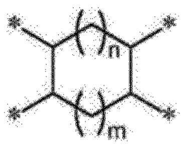

,

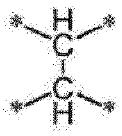

,

or

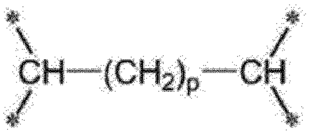

;

L is selected from a single bond or methylene, and two Ls in a same ring structure are not single bonds at the same time;
m is 1, 2, 3, or 4.
n is 0, 1, or 2; and
p is 0, 1, 2, 3, 4, 5, or 6.

In some embodiments, the compound of formula 1 includes at least one of the following compounds:

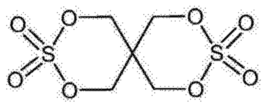

formula 1-1,

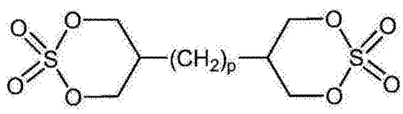

formula 1-2,

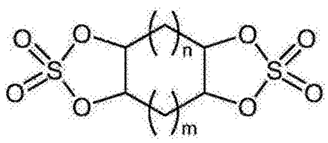

formula 1-3,

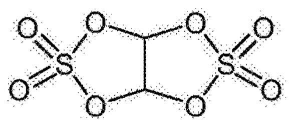

formula 1-4,

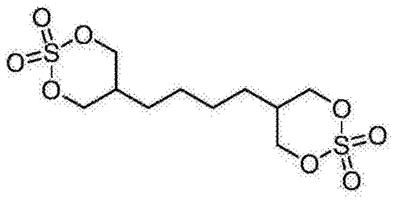

formula 1-5,

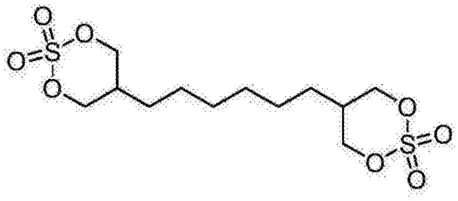

formula 1-6,

or

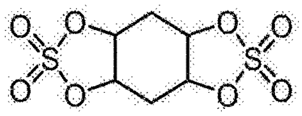

formula 1-7.

In some embodiments, based on the weight of the electrolyte, the percentage of the sulfur-oxygen double bond-containing compound falls in the range of 0.01% to 10%. In some embodiments, Y falls in the range of 0.1 to 8. In some embodiments, Y falls in the range of 0.5 to 5. In some embodiments, Y falls in the range of 1 to 3. In some embodiments, Y is 0.01, 0.05, 0.1, 0.5, 0.8, 1, 1.5, 2, 2.5, 3, 3.5, 4, 4.5, 5, 5.5, 6, 6.5, 7, 7.5, 8, 8.5, 9, 9.5, or 10, or falls in a range formed by any two of the foregoing values. When the percentage of the sulfur-oxygen double bond-containing compound in the electrolyte falls in the preceding range, the direct current internal resistance and the thickness swelling rate of the electrochemical apparatus can be further decreased, and the safety of the electrochemical apparatus can be improved.

In some embodiments, the percentage Y% of the sulfur-oxygen double bond-containing compound in the electrolyte and the area ratio A of the intermediate layer to the active material layer satisfy $0.009 \leq A \times Y \leq 6$. In some embodiments, $0.01 \leq A \times Y \leq 5$. In some embodiments, $0.05 \leq A \times Y \leq 3$. In some embodiments, $0.1 \leq A \times Y \leq 2$. In some embodiments, $0.5 \leq A \times Y \leq 1$. In some embodiments, $A \times Y$ is 0.009, 0.01, 0.05, 0.1, 0.5, 1, 2, 3, 4, 5, or 6, or falls in a range formed by any two of the foregoing values. When the percentage Y% of the sulfur-oxygen double bond-containing compound in the electrolyte and the area ratio A of the intermediate layer to the active material layer satisfy the preceding relationship, the direct current internal resistance and thickness swelling rate of the electrochemical apparatus can be further decreased, and the safety of the electrochemical apparatus can be improved.

In some embodiments, the percentage Y% of the sulfur-oxygen double bond-containing compound in the electrolyte and the specific surface area X $m^2/g$ of the conductive material satisfy $0.2 \leq X \times Y \leq 200$. In some embodiments, $0.5 \leq X \times Y \leq 150$. In some embodiments, $1 \leq X \times Y \leq 100$. In some embodiments, $5 \leq X \times Y \leq 80$. In some embodiments, $10 \leq X \times Y \leq 50$. In some embodiments, $X \times Y$ is 0.2, 0.5, 1, 5, 10, 20, 50, 80, 100, 120, 150, 180, or 200, or falls in a range formed by any two of the foregoing values. When the percentage Y% of the sulfur-oxygen double bond-containing compound in the electrolyte and the specific surface area X m2/g of the conductive material satisfy the preceding relationship, the direct current internal resistance and the thickness swelling rate of the electrochemical apparatus can be further decreased, and the safety of the electrochemical apparatus can be improved.

In some embodiments, the electrolyte further includes at least one of the following compounds:

(a) propionate;
(b) organic compound having the cyano group
(c) lithium difluorophosphate; and
(d) compound of formula 2:

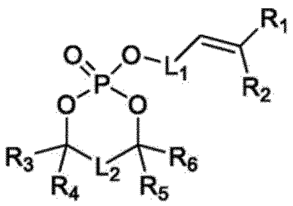

formula 2

where

$R^1$, $R^2$, $R^3$, $R^4$, $R^5$, and $R^6$ each are independently hydrogen or $C_1$-$C_{10}$ alkyl group; and
$L_1$ and $L_2$ each are independently $-(CR^7R^8)_n-$;
$R^7$ and $R^8$ each are independently hydrogen or $C_1$-$C_{10}$ alkyl group; and n is 1, 2, or 3.

(a) Propionate

In some embodiments, the propionate includes a compound of formula 3:

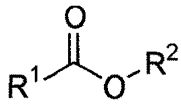

formula 3

where

$R^1$ is selected from ethyl or haloethyl, and
$R^2$ is selected from $C_1$-$C_6$ alkyl group or $C_1$-$C_6$ haloalkyl group.

In some embodiments, the propionate includes but is not limited to methyl propionate, ethyl propionate, propyl propionate, butyl propionate, amyl propionate, methyl halopropionate, ethyl halopropionate, propyl halopropionate, butyl halopropionate, and amyl halopropionate. In some embodiments, the propionate is selected from at least one of methyl propionate, ethyl propionate, propyl propionate, butyl propionate, or pentyl propionate. In some embodiments, the halogen groups in the methyl halopropionate, ethyl halopropionate, propyl halopropionate, butyl halopropionate, and amyl halopropionate are selected from one or more of a fluorine group (-F), a chlorine group (-Cl), a bromine group (-Br), and an iodine group (-I). In some embodiments, the halogen group is a fluorine group (-F) that can achieve a better effect.

In some embodiments, based on the weight of the electrolyte, the percentage of propionate ranges from 10% to 60%. In some embodiments, based on the weight of the electrolyte, the percentage of propionate ranges from 15% to 55%. In some embodiments, based on the weight of the electrolyte, the percentage of propionate ranges from 30% to 50%. In some embodiments, based on the weight of the electrolyte, the percentage of propionate ranges from 30% to 40%. More excellent effects can be achieved by using the propionate having the preceding percentage.

(b) Compound having a cyano group

In some embodiments, the compound having the cyano group includes but is not limited to one or more of the following: butanedinitrile, glutaronitrile, adiponitrile, 1,5-dicyanopentane, 1,6-dicyanohexane, tetramethylsuccinonitrile, 2-methylglutaronitrile, 2,4-dimethylglutaronitrile, 2,2,4,4-tetramethylglutaronitrile, 1,4-dicyanopentane, 1,2-dicyanobenzene, 1,3-dicyanobenzene, 1,4-dicyanobenzene, ethylene glycol bis(propionitrile) ether, 3,5-dioxa-heptanedionitrile, 1,4-bis(cyanoethoxy) butane, diethylene glycol di(2-cyanoethyl) ether, triethylene glycol di(2-cyanoethyl) ether, tetraethylene glycol di(2-cyanoethyl) ether, 1,3-di(2-cyanoethoxy) propane, 1,4-di(2-cyanoethoxy) butane, 1,5-di(2-cyanoethoxy) pentane, ethylene glycol di(4-cyanobutyl) ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, 1,3,5-pentamethylenetricarbonitrile, 1,2,3-propanetricarbonitrile, 1,3,6-hexanetricarbonitrile, 1,2,6-hexanetricarbonitrile, 1,2,3-tris(2-cyanoethoxy) propane, 1,2,4-tris(2-cyanoethoxy) butane, 1,1,1-tris(cyanoethoxymethylene) ethane, 1,1,1-tris(cyanoethoxymethylene) propane, 3-methyl-1,3,5-tris(cyanoethoxy) pentane, 1,2,7-tris(cyanoethoxy) heptane, 1,2,6-tris(cyanoethoxy) hexane, and 1,2,5-tris(cyanoethoxy) pentane.

The compound having the cyano group may be used alone or in any combination. If the electrolyte contains two or more compounds having the cyano group, the percentage of the compounds having the cyano group is the total percentage of the two or more compounds having the cyano group. In some embodiments, based on the weight of the

electrolyte, the percentage of the compound having the cyano group ranges from 0.1% to 15%. In some embodiments, based on the weight of the electrolyte, the percentage of the compound having the cyano group ranges from 0.5% to 10%. In some embodiments, based on the weight of the electrolyte, the percentage of the compound having the cyano group ranges from 1% to 8%. In some embodiments, based on the weight of the electrolyte, the percentage of the compound having the cyano group ranges from 3% to 5%.

(c) Lithium difluorophosphate ($LiPO_2F_2$)

In some embodiments, based on weight of the electrolyte, a percentage of the lithium difluorophosphate is b%, and b falls in the range of 0.01 to 2. In some embodiments, b falls in the range of 0.05 to 1.5. In some embodiments, b falls in the range of 0.1 to 1. In some embodiments, b falls in the range of 0.3 to 0.5. In some embodiments, b is 0.01, 0.05, 0.1, 0.15, 0.2, 0.25, 0.3, 0.35, 0.4, 0.45, 0.5, 0.8, 1, 1.2, 1.5, 1.8, 2, or falls in a range formed by any two of the foregoing values. When the percentage of the lithium difluorophosphate in the electrolyte falls in the preceding range, the direct current internal resistance and the thickness swelling rate of the electrochemical apparatus can be further decreased, and the safety of the electrochemical apparatus can be improved.

In some embodiments, the percentage Y% of the sulfur-oxygen double bond-containing compound and the percentage b% of the lithium difluorophosphate in the electrolyte satisfy $0.01 \leq Y/b \leq 100$. In some embodiments, $0.05 \leq Y/b \leq 80$. In some embodiments, $0.1 \leq Y/b \leq 50$. In some embodiments, $0.5 \leq Y/b \leq 20$. In some embodiments, $1 \leq Y/b \leq 10$. In some embodiments, Y/b is 0.01, 0.05, 0.1, 0.5, 1, 5, 10, 20, 50, 80, 100, or falls in a range formed by any two of the foregoing values. When the percentage Y% of the sulfur-oxygen double bond-containing compound and the percentage b% of the lithium difluorophosphate in the electrolyte satisfy the preceding relationship, the direct current internal resistance and thickness swelling rate of the electrochemical apparatus can be further decreased, and the safety of the electrochemical apparatus can be improved.

(d) Compound of formula 2

In some embodiments, the compound of formula 2 includes at least one of the following compounds:

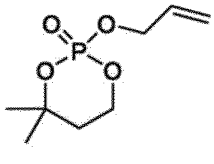 formula 2-1, 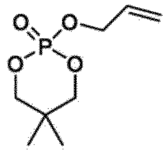 formula 2-2,

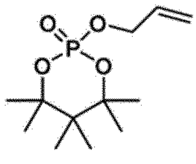 formula 2-3, 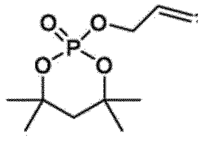 formula 2-4,

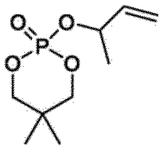 formula 2-5, or 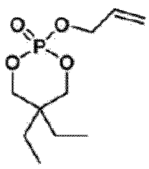 formula 2-6.

In some embodiments, based on the weight of the electrolyte, the percentage of the compound of formula 2 ranges from 0.01% to 5%. In some embodiments, based on the weight of the electrolyte, the percentage of the compound of formula 2 ranges from 0.05% to 3%. In some embodiments, based on the weight of the electrolyte, the percentage of the compound of formula 2 ranges from 0.1% to 2%. In some embodiments, based on the weight of the electrolyte, the percentage of the compound of formula 2 ranges from 0.5% to 1%. In some embodiments, based on the weight of the electrolyte, the percentage of the compound of formula 2 is 0.01%, 0.05%, 0.1%, 0.5%, 1%, 2%, 3%, 4%, 5%, or falls in a range formed by any two of the foregoing values.

## Solvent

In some embodiments, the electrolyte further contains any non-aqueous solvent that is known in the art and that may be used as a solvent for the electrolyte.

In some embodiments, the non-aqueous solvent includes but is not limited to one or more of the following: cyclic carbonate, linear carbonate, cyclic carboxylate, linear carboxylate, cyclic ether, linear ether, a phosphorus-containing organic solvent, a sulfur-containing organic solvent, and an aromatic fluorine-containing solvent.

In some embodiments, examples of the cyclic carbonate may include, but are not limited to, one or more of the following: ethylene carbonate (EC), propylene carbonate (PC), and butylene carbonate. In some embodiments, the cyclic carbonate has 3 to 6 carbon atoms.

In some embodiments, examples of the linear carbonate may include, but are not limited to, one or more of the following: dimethyl carbonate, ethyl methyl carbonate, diethyl carbonate (DEC), methyl n-propyl carbonate, ethyl n-propyl carbonate, dipropyl carbonate, and the like. Examples of the linear carbonate substituted with fluorine may include, but are not limited to, one or more of the following: bis(fluoromethyl) carbonate, bis(difluoromethyl) carbonate, bis (trifluoromethyl) carbonate, bis(2-fluoroethyl) carbonate, bis (2,2-difluoroethyl) carbonate, bis(2,2,2-trifluoroethyl) carbonate, 2-fluoroethyl methyl carbonate, 2,2-difluoroethyl methyl carbonate, 2,2,2-trifluoroethyl methyl carbonate, and the like.

In some embodiments, examples of the cyclic carboxylate may include, but are not limited to, one or more of the following: γ-butyrolactone and γ-valerolactone. In some embodiments, some hydrogen atoms in the cyclic carboxylate may be substituted with fluorine.

In some embodiments, examples of the linear carboxylates may include, but are not limited to, one or more of the following: methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, and ethyl pivalate. In some embodiments, some hydrogen atoms in the chain carboxylate may be substituted with fluorine. In some embodiments, examples of the fluorine-substituted linear carboxylate may include, but are not limited to, methyl trifluoroacetate, ethyl trifluoroacetate, propyl trifluoroacetate, butyl trifluoroacetate, 2,2,2-trifluoroethyl trifluoroacetate, and the like.

In some embodiments, examples of the cyclic ether may include, but are not limited to, one or more of the following: tetrahydrofuran, 2-methyltetrahydrofuran, 1,3-dioxolane, 2-methyl 1,3-dioxolane, 4-methyl 1,3-dioxolane, 1,3-dioxane, 1,4-dioxane, and dimethoxypropane.

In some embodiments, examples of the linear ether may include, but are not limited to, one or more of the following: dimethoxymethane, 1,1-dimethoxyethane, 1,2-dimethoxyethane, diethoxymethane, 1,1-diethoxyethane, 1,2-diethoxyethane, ethoxymethoxymethane, 1,1-ethoxymethoxyethane, and 1,2-ethoxymethoxyethane.

In some embodiments, examples of the phosphorus-containing organic solvent may include, but are not limited to, one or more of the following: trimethyl phosphate, triethyl phosphate, dimethyl ethyl phosphate, methyl diethyl phosphate, ethylene methyl phosphate, ethylene ethyl phosphate, triphenyl phosphate, trimethyl phosphite, triethyl phosphite, triphenyl phosphite, tris(2,2,2-trifluoroethyl) phosphate, tris(2,2,3,3,3-pentafluoropropyl) phosphate, and the like.

In some embodiments, examples of the sulfur-containing organic solvent may include, but are not limited to, one or more of the following: sulfolane, 2-methylsulfolane, 3-methylsulfolane, dimethyl sulfone, diethyl sulfone, ethyl methyl sulfone, methyl propyl sulfone, dimethyl sulfoxide, methyl methanesulfonate, ethyl methanesulfonate, methyl ethanesulfonate, ethyl ethanesulfonate, dimethyl sulfate, diethyl sulfate, and dibutyl sulfate. In some embodiments, some hydrogen atoms in the organic solvent containing sulfur may be substituted with fluorine.

In some embodiments, the aromatic fluorine-containing solvent includes but is not limited to one or more of the following: fluorobenzene, difluorobenzene, trifluorobenzene, tetrafluorobenzene, pentafluorobenzene, hexafluorobenzene, and trifluoromethylbenzene.

In some embodiments, the solvent used in the electrolyte in this application includes cyclic carbonate, chain carbonate, cyclic carboxylate, chain carboxylate, and a combination thereof. In some embodiments, the solvent used in the electrolyte in this application includes an organic solvent selected from a group formed by the following materials: ethylene carbonate, propylene carbonate, diethyl carbonate, ethyl propionate, propyl propionate, propyl acetate, ethyl acetate, and a combination thereof. In some embodiments, the solvent used in the electrolyte in this application includes ethylene carbonate, propylene carbonate, diethyl carbonate, ethyl propionate, propyl propionate, γ-butyrolactone, and a combination thereof.

## Additive

In some embodiments, examples of the additive may include, but are not limited to, one or more of the following: fluorocarbonate, carbon-carbon double bond-containing ethylene carbonate, and anhydride.

In some embodiments, based on the weight of the electrolyte, a percentage of the additive ranges from 0.01%

to 15%, ranges from 0.1% to 10%, or ranges from 1% to 5%.

According to an embodiment of this application, based on the weight of the electrolyte, the percentage of the propionate is 1.5 to 30 times, 1.5 to 20 times, 2 to 20 times, or 5 to 20 times the percentage of the additive.

In some embodiments, the additive includes one or more carbon-carbon double bond-containing ethylene carbonates. Examples of the carbon-carbon double bond-containing ethylene carbonate may include, but are not limited to, one or more of the following: vinylidene carbonate, methylvinylidene carbonate, ethylvinylidene carbonate, 1,2-dimethylvinylidene carbonate, 1,2-diethylvinylidene carbonate, fluorovinylidene carbonate, trifluoromethylvinylidene carbonate; vinylethylene carbonate, 1-methyl-2-vinylethylene carbonate, 1-ethyl-2-vinylethylene carbonate, 1-n-propyl-2-vinylethylene carbonate, 1-methyl-2-vinylethylene carbonate, 1,1-divinylethylene carbonate, 1,2-divinylethylene carbonate, 1,1-dimethyl-2-methylene ethylene carbonate, 1,1-diethyl-2-methylene ethylene carbonate, and the like. In some embodiments, the carbon-carbon double bond-containing ethylene carbonate includes vinylidene carbonate, and can easily achieve better effects.

In some embodiments, the additive is a combination of fluorocarbonate and carbon-carbon double bond-containing ethylene carbonate. In some embodiments, the additive is a combination of fluorocarbonate and the sulfur-oxygen double bond-containing compound. In some embodiments, the additive is a combination of fluorocarbonate and a compound having 2 to 4 cyano groups. In some embodiments, the additive is a combination of fluorocarbonate and cyclic carboxylate. In some embodiments, the additive is a combination of fluorocarbonate and cyclic phosphoric anhydride. In some embodiments, the additive is a combination of fluorocarbonate and phosphoric anhydride. In some embodiments, the additive is a combination of fluorocarbonate and sulfonic anhydride. In some embodiments, the additive is a combination of fluorocarbonate and carboxylic acid sulfonic anhydride.

Electrolytic salt

The electrolytic salt is not particularly limited. Any material commonly known as being applicable to serve as an electrolytic salt can be used. For lithium secondary batteries, lithium salts are typically used. Examples of the electrolytic salt may include, but are not limited to, inorganic lithium salts such as $LiPF_6$, $LiBF_4$, $LiClO_4$, $LiAlF_4$, $LiSbF_6$, and $LiWF_7$; lithium tungstates such as $LiWOF_5$; lithium carboxylate salts such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$; lithium sulfonates salts such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$; lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, and $LiN(CF_3SO_2)(C_4F_9SO_2)$; lithium methide salts such as $LiC(FSO_2)_3$, $LiC(CF_3SO_2)_3$, and $LiC(C_2F_5SO_2)_3$; lithium (malonate) borate salts such as lithium bis(malonate) borate and lithium difluoro(malonate) borate; lithium (malonato)phosphate salts such as lithium tris(malonato)phosphate, lithium difluorobis(malonato)phosphate, and lithium tetrafluoro(malonato)phosphate; fluorine-containing organolithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_3CF_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$; lithium oxalatoborate salts such as lithium difluorooxalatoborate and lithium bis(oxalato)borate; and lithium oxalatophosphate salts such as lithium tetrafluorooxalatophosphate, lithium difluorobis(oxalato)phosphate, and lithium tris(oxalato)phosphate.

In some embodiments, the electrolytic salt is selected from $LiPF_6$, $LiSbF_6$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonylimide, lithium cyclic 1,3-perfluoropropane disulfonylimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$, $LiPF_3(C_2F_5)_3$, lithium difluorooxalatoborate, lithium bis(oxalato)borate, or lithium difluorobis(oxalato)phosphate, which contributes to improving the characteristics of the electrochemical apparatus, for example, output power, high-rate charge/discharge, high-temperature storage, and cycling.

The percentage of the electrolytic salt is not particularly limited, provided that the effects of this application are not impaired. In some embodiments, the total molar concentration of lithium in the electrolyte is greater than 0.3 mol/L, greater than 0.4 mol/L, or greater than 0.5 mol/L. In some embodiments, the total molar concentration of lithium in the electrolyte is less than 3 mol/L, less than 2.5 mol/L, or less than 2.0 mol/L. In some embodiments, the total molar concentration of lithium in the electrolyte falls in a range between any two of the foregoing values. When the percentage of the electrolytic salt falls in the preceding range, the amount of lithium as charged particles would not be excessively small, and the viscosity can be controlled within an appropriate range, so as to ensure good conductivity.

When two or more electrolytic salts are used, the electrolytic salts include at least one salt selected from a group consisting of monofluorophosphate, borate, oxalate, and fluorosulfonate. In some embodiments, the electrolytic salt includes a salt selected from a group consisting of monofluorophosphate, oxalate, and fluorosulfonate. In some embodiments, the electrolytic salt includes a lithium salt. In some embodiments, based on the weight of the electrolytic salt, the percentage of the salt selected from the group consisting of monofluorophosphate, borate, oxalate, and fluorosulfonate is higher than 0.01% or higher than 0.1%. In some embodiments, based on the weight of the electrolytic salt,

the percentage of the salt selected from the group consisting of monofluorophosphate, borate, oxalate, and fluorosulfonate is lower than 20% or lower than 10%. In some embodiments, the percentage of the salt selected from the group consisting of monofluorophosphate, borate, oxalate, and fluorosulfonate falls in a range between any two of the foregoing values.

In some embodiments, the electrolytic salt includes more than one material selected from the group consisting of monofluorophosphate, borate, oxalate, and fluorosulfonate, and more than one other salt different from the more than one material. Examples of the other salt different from the salts in the group include lithium salts exemplified above, and in some embodiments, are $LiPF_6$, $LiN(FSO_2)(CF_3SO_2)$, $LiN(CF_3SO_2)_2$, $LiN(C_2F_5SO_2)_2$, lithium cyclic 1,2-perfluoroethane disulfonimide, lithium cyclic 1,3-perfluoropropane disulfonimide, $LiC(FSO_2)_3$, $LiC(CF_3SO_2)_3$, $LiC(C_2F_5SO_2)_3$, $LiBF_3CF_3$, $LiBF_3C_2F_5$, $LiPF_3(CF_3)_3$ and $LiPF_3(C_2F_5)_3$. In some embodiments, the other salt is $LiPF_6$.

In some embodiments, based on the weight of the electrolytic salt, the percentage of the other salt is higher than 0.01% or higher than 0.1%. In some embodiments, based on the weight of the electrolytic salt, the percentage of the other salt is lower than 20%, lower than 15%, or lower than 10%. In some embodiments, the percentage of the other salt falls in a range between any two of the foregoing values. The other salt having the foregoing percentage contributes to balancing the conductivity and viscosity of the electrolyte.

In the electrolyte, in addition to the foregoing solvent, additive, and electrolytic salt, additional additives such as a negative electrode film forming agent, a positive electrode protection agent, and an overcharge prevention agent may be included as necessary. For the additive, an additive typically used in non-aqueous electrolyte secondary batteries may be used, and examples thereof may include, but are not limited to, vinylidene carbonate, succinic anhydride, biphenyls, cyclohexylbenzene, 2,4-difluoroanisole, and the like. These additives may be used alone or in any combination. In addition, a proportion of these additives in the electrolyte is not particularly limited and may be set as appropriate to the types of the additives and the like. In some embodiments, based on the weight of the electrolyte, the percentage of the additive is lower than 5%, falls in the range of 0.01% to 5%, or falls in the range of 0.2% to 5%.

## III. Separator

In order to prevent short circuit, a separator is typically provided between the positive electrode and the negative electrode. In this case, the electrolyte of this application typically permeates the separator.

The material and shape of the separator are not particularly limited, provided that the separator does not significantly impair the effects of this application. The separator may be a resin, glass fiber, inorganic substance, or the like that is formed of a material stable to the electrolyte of this application. In some embodiments, the separator includes a porous sheet or nonwoven fabric-like material having an excellent fluid retention property, or the like. Examples of the material of the resin or glass fiber separator may include, but are not limited to, polyolefin, aromatic polyamide, polytetrafluoroethylene, polyethersulfone, and the like. In some embodiments, the polyolefin is polyethylene or polypropylene. In some embodiments, the polyolefin is polypropylene. The material of the separator may be used alone or in any combination.

The separator may alternatively be a material formed by stacking the foregoing materials, and examples thereof include, but are not limited to, a three-layer separator formed by stacking polypropylene, polyethylene, and polypropylene in order.

Examples of the material of the inorganic substance may include, but are not limited to, oxides such as aluminum oxide and silicon dioxide, nitrides such as aluminum nitride and silicon nitride, and sulfates (for example, barium sulfate and calcium sulfate). The form of the inorganic substance may include, but is not limited to, a granular or fibrous form.

The form of the separator may be a thin-film form, and examples thereof include, but are not limited to, a nonwoven fabric, a woven fabric, a microporous film, and the like. In the thin-film form, the separator has a pore diameter of 0.01 μm to 1 μm and a thickness of 5 μm to 50 μm. In addition to the standalone thin-film-like separator, the following separator may alternatively be used: a separator that is obtained by using a resin-based binder to form a composite porous layer containing inorganic particles on the surface of the positive electrode and/or the negative electrode, for example, a separator that is obtained by using fluororesin as a binder to form a porous layer on two surfaces of the positive electrode with alumina particles of which 90% have a particle size less than 1 μm.

The thickness of the separator is random. In some embodiments, the thickness of the separator is greater than 1 μm, greater than 5 μm, or greater than 8 μm. In some embodiments, the thickness of the separator is less than 50 μm, less than 40 μm, or less than 30 μm. In some embodiments, the thickness of the separator falls in a range between any two of the foregoing values. When the thickness of the separator falls in the preceding range, the insulation performance and mechanical strength can be ensured, the rate performance and energy density of the electrochemical apparatus can be ensured.

When a porous material such as a porous sheet or a nonwoven fabric is used as the separator, the porosity of the separator is random. In some embodiments, the porosity of the separator is higher than 10%, higher than 15%, or higher than 20%. In some embodiments, the porosity of the separator is lower than 60%, lower than 50%, or lower than 45%. In some embodiments, the porosity of the separator falls in a range between any two of the foregoing values.

When the porosity of the separator falls in the preceding range, the insulation performance the mechanical strength can be ensured and film resistance can be suppressed, so that the electrochemical apparatus has good rate performance.

The average pore diameter of the separator is also random. In some embodiments, the average pore diameter of the separator is less than 0.5 μm or less than 0.2 μm. In some embodiments, the average pore diameter of the separator is greater than 0.05 μm. In some embodiments, the average pore diameter of the separator falls in a range between any two of the foregoing values. If the average pore diameter of the separator exceeds the foregoing range, a short circuit is likely to occur. When the average pore diameter of the separator falls in the preceding range, the electrochemical apparatus has good safety performance.

## IV. Assemblies of the electrochemical apparatus

The assemblies of the electrochemical apparatus include an electrode assembly, a collector structure, an outer packing case, and a protective unit.

### Electrode assembly

The electrode assembly may be any one of a laminated structure in which the positive electrode and the negative electrode are laminated with the separator interposed therebetween, and a structure in which the positive electrode and the negative electrode are wound in a swirl shape with the separator interposed therebetween. In some embodiments, a mass percentage of the electrode assembly (occupancy of the electrode assembly) in the internal volume of the battery is greater than 40% or greater than 50%. In some embodiments, the occupancy of the electrode assembly is less than 90% or less than 80%. In some embodiments, the occupancy of the electrode assembly falls in a range between any two of the foregoing values. When the occupancy of the electrode assembly falls in the preceding range, the capacity of the electrochemical apparatus can be ensured, and a decrease in repeated charge/discharge performance and high temperature storage property caused by an increasing internal pressure can be suppressed.

### Collector structure

The collector structure is not particularly limited. In some embodiments, the collector structure is a structure that contributes to decreasing the resistance of wiring portions and bonding portions. When the electrode assembly is the foregoing laminated structure, a structure in which metal core portions of the electrode layers are bundled and welded to terminals can be used. An increase in an electrode area of one layer causes a higher internal resistance; therefore, it is also acceptable that more than two terminals are provided in the electrode to decrease the resistance. When the electrode assembly has the foregoing winding structure, more than two lead structures are provided at each of the positive electrode and the negative electrode, and are bundled at the terminals, so as to reduce the internal resistance.

### Outer packing case

The material of the outer packing case is not particularly limited, provided that the material is a material stable to the electrolyte in use. The outer packing case may use, but is not limited to a nickel-plated steel plate, stainless steel, metals such as aluminum, aluminum alloy, or magnesium alloy, or laminated films of resin and aluminum foil. In some embodiments, the outer packing case is made of metal including aluminum or an aluminum alloy, or is made of a laminated film.

The metal outer packing case includes but is not limited to a sealed packaging structure formed by depositing metal through laser welding, resistance welding, or ultrasonic welding; or a riveting structure formed by using the foregoing metal or the like with a resin pad disposed therebetween. The outer packing case using the laminated film includes but is not limited to a sealed packaging structure or the like formed by thermally adhering resin layers. In order to improve the sealing property, a resin different from the resin used in the laminated film may be sandwiched between the resin layers. When the sealed structure is formed by thermally adhering the resin layers through current collecting terminals, a resin having a polar group or a modified resin into which a polar group is introduced may be used as the sandwiched resin in consideration of the bonding of metal and resin. In addition, the outer packing case may be in any random shape. For example, it may have any one of a cylindrical shape, a square shape, a laminated form, a button form, a large form, or the like.

### Protective unit

The protection unit may use a positive temperature coefficient (PTC), a temperature fuse, or a thermistor whose resistance increases during abnormal heat release or excessive current flows, a valve (current cutoff valve) for cutting

off a current flowing in a circuit by sharply increasing an internal pressure or an internal temperature of a battery during abnormal heat release, or the like. The protection unit may be selected from elements that do not operate in conventional high-current use scenarios, or such design may be used that abnormal heat release or thermal runaway does not occur even without a protection unit.

V. Application

The electrochemical apparatus according to this application includes any apparatus in which an electrochemical reaction takes place. Specific examples of the apparatus include all types of primary batteries, secondary batteries, fuel batteries, solar batteries, or capacitors. In particular, the electrochemical apparatus is a lithium secondary battery, including a lithium metal secondary battery or a lithium ion secondary battery.

This application also provides an electronic apparatus, including the electrochemical apparatus according to this application.

A purpose of the electrochemical apparatus in this application is not particularly limited. It can be used for any known electronic apparatus in the prior art. In some embodiments, the electrochemical apparatus of this application may be used for, without limitation, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

## Examples

The following describes performance evaluation performed based on Examples and Comparative Examples of the lithium-ion battery in this application.

### I. Preparation of lithium-ion battery

1. Preparation of intermediate layer

A conductive material and styrene-butadiene rubber (SBR) were mixed based on a mass ratio of 64.5%:35.5% in deionized water. The mixture was stirred evenly to obtain an intermediate layer slurry. The slurry was applied onto a positive or negative electrode current collector.

2. Preparation of negative electrode

Artificial graphite, styrene-butadiene rubber, and sodium carboxymethylcellulose were mixed based on a mass ratio of 96%:2%:2% in deionized water. The mixture was stirred evenly to obtain a negative electrode slurry. The negative electrode slurry was applied onto a current collector of 12μm or the intermediate layer. After steps of drying, cold pressing, cutting, and tab welding, a negative electrode was obtained.

3. Preparation of positive electrode

Lithium cobaltate ($LiCoO_2$), a conductive material (Super-P), and polyvinylidene fluoride (PVDF) were mixed based on a mass ratio of 95%:2%:3% in N-methylpyrrolidone (NMP). The mixture was stirred evenly to obtain a positive electrode slurry. The positive electrode slurry was applied onto an aluminum foil of 12μm or the intermediate layer. After steps of drying, cold pressing, cutting, and tab welding, a positive electrode was obtained.

4. Preparation of electrolyte

Under a dry argon environment, EC, PC, and DEC (based on a weight ratio of 1:1:1) were mixed, and $LiPF_6$ was added. The mixture was mixed evenly to obtain a base electrolyte, where the concentration of $LiPF_6$ was 1.15 mol/L. Different amounts of additives were added to the base electrolyte, to obtain different electrolytes used in different examples and comparative examples.

Abbreviations and full names of components in the electrolyte are listed in the following table:

| Name of material | Abbreviation | Name of material | Abbreviation |
|---|---|---|---|
| Ethylene carbonate | EC | Propylene carbonate | PC |
| Ethyl methyl carbonate | EMC | Ethyl propionate | EP |
| Propyl propionate | PP | Compound of formula 2-1 | Formula 2-1 |
| Butanedinitrile | SN | Adiponitrile | ADN |
| Ethylene glycol di(2-cyanoethyl) ether | EDN | 1,3,6-hexanetricarbonitrile | HTCN |
| 1,2,3-tris(2-cyanoethoxy) propane | TCEP | Lithium difluorophosphate | $LiPO_2F_2$ |
| 1,3-propanesulfonate | PS | 1,2-ethylene sulfate | DTD |
| Compound of formula 1-1 | Formula 1-1 | Compound of formula 2-1 (p=1) | Formula 1-2 |

5. Preparation of separator

A polyethylene (PE) porous polymer film was used as the separator.

6. Preparation of lithium-ion battery

The resulting positive electrode, separator, and negative electrode were wound in order and placed in an outer packing foil, leaving a liquid injection hole. The electrolyte was injected from the liquid injection hole which was then sealed. Then, formation and grading were performed to obtain a lithium-ion battery.

**II. Test method**

1. Method for testing direct current internal resistance of the lithium-ion battery

At 25°C,the lithium-ion battery was charged at a constant current of 1C (nominal capacity) to 4.45 V, charged at a constant voltage of 4.45 V until the current was below 0.05C, left standing for 5 minutes, then discharged at a constant current of 1C to a cut-off voltage of 3 V, charged at a constant current of 1C (nominal capacity) to 4.45 V, charged at a constant voltage of 4.45 V until the current was below 0.05C, left standing for 5 minutes, and then discharged at a constant current of 1C to a cut-off voltage of 3 V 400 cycles were performed like this. The discharge capacity of the 400-th cycle was recorded. The lithium-ion battery was adjusted in capacity to 20% of the required full charge capacity with the actual discharge capacity of the 400-th cycle, and then continued to be discharged at a current of 0.3C for 10 seconds. The direct current internal resistance of the lithium-ion battery was calculated by using the following formula: direct current internal resistance = (voltage before discharge - voltage at the end of discharge)/current

15 samples were tested in each example or comparative example and an average value was obtained.

2. Method for testing the thickness swelling rate of the lithium-ion battery

At 25°C, the lithium-ion battery was left standing for 30 minutes, and its thickness T1 was measured. Then, the tlithium-ion battery was heated at a temperature rise rate of 5°C/min. When the temperature rose to 130°C, the lithium-ion battery was left standing for 30 minutes, and the thickness T2 of the lithium-ion battery was measured. The thickness swelling rate of the lithium-ion battery was calculated by using the following formula:

$$\text{thickness swelling rate}=[(T2-T1)/T1]\times 100\%$$

**III. Test result**

Table 1 shows the influence of the area ratio of the intermediate layer to the active material layer and the sulfur-oxygen double bond-containing compound in the electrolyte on the direct current internal resistance and thickness swelling rate of the lithium-ion battery.

**Table 1**

| | Electrode containing an intermediate layer | A | Sulfur-oxygen double bond-containing compound | | A×Y | Direct current internal resistance (mΩ) | Thickness swelling rate |
|---|---|---|---|---|---|---|---|
| | | | Type | Percentage Y (%) | | | |
| Comparative Example 1-1 | / | / | / | / | 0 | 279 | 200% |
| Comparative Example 1-2 | Positive electrode | 0.8 | / | / | 0 | 285 | 180% |
| Comparative Example 1-3 | Positive electrode | 1.2 | / | / | 0 | 295 | 170% |
| Comparative Example 1-4 | Positive electrode | 0.9 | / | / | 0 | 281 | 175% |
| Comparative Example 1-5 | Negative electrode | 0.8 | / | / | 0 | 318 | 192% |
| Comparative Example 1-6 | Negative electrode | 1.2 | / | / | 0 | 305 | 189% |
| Comparative Example 1-7 | Negative electrode | 0.9 | / | / | 0 | 294 | 181% |
| Comparative Example 1-8 | / | / | PS | 1 | 0 | 255 | 210% |
| Comparative Examples 1-9 | Positive electrode | 1.2 | PS | 5 | 6 | 206 | 196% |
| Example 1-1 | Positive electrode | 0.9 | PS | 1 | 0.9 | 185 | 135% |
| Example 1-2 | Negative electrode | 0.9 | PS | 1 | 0.9 | 179 | 150% |

| | Electrode containing an intermediate layer | A | Sulfur-oxygen double bond-containing compound | | A×Y | Direct current internal resistance (mΩ) | Thickness swelling rate |
|---|---|---|---|---|---|---|---|
| | | | Type | Percentage Y (%) | | | |
| Example 1-3 | Positive electrode | 1.0 | PS | 1 | 1.0 | 175 | 131% |
| Example 1-4 | Positive electrode | 1.1 | PS | 1 | 1.1 | 165 | 115% |
| Example 1-5 | Positive electrode | 1.1 | PS | 2 | 2.2 | 153 | 108% |
| Example 1-6 | Positive electrode | 1.1 | PS | 5 | 5.5 | 145 | 105% |
| Example 1-7 | Positive electrode | 1.1 | PS | 8 | 8.8 | 176 | 163% |
| Example 1-8 | Positive electrode | 0.9 | DTD | 1 | 0.9 | 153 | 116% |
| Example 1-9 | Positive electrode | 0.9 | Formula 1-1 | 1 | 0.9 | 125 | 93% |
| Example 1-10 | Positive electrode | 0.9 | Formula 1-2 | 1 | 0.9 | 108 | 83% |
| Example 1-11 | Positive electrode | 0.9 | PS | 0.01 | 0.009 | 167 | 175% |
| Example 1-12 | Positive electrode | 0.9 | PS | 0.005 | 0.0045 | 198 | 181% |
| Example 1-13 | Positive electrode | 0.9 | PS | 8 | 7.2 | 193 | 161% |
| Example 1-14 | Positive electrode | 0.9 | PS | 10 | 9 | 199 | 165% |
| Example 1-15 | Positive electrode | 0.9 | PS | 12 | 10.8 | 206 | 185% |

"-" means no addition or not having such property.

The results show that when the area ratio of the intermediate layer to the active material layer falls in the range of 0.9 to 1.1 and the electrolyte includes a sulfur-oxygen double bond-containing compound, the swelling/shrinkage of the electrode plate in the charge-discharge process can be suppressed, and the sulfur-oxygen double bond-containing compound contributes to stabilizing the surface structure of the electrode, the interface between the active material layer

and the current collector, and the interface between the active material layer and the electrolyte, thereby significantly decreasing the direct current internal resistance and thickness swelling rate of the lithium-ion battery and improving the safety of the lithium-ion battery.

The intermediate layer can be present in the positive electrode or the negative electrode, which can achieve substantially equivalent effects.

When the percentage of the sulfur-oxygen double bond-containing compound in the electrolyte falls in the range of 0.01% to 10%, the direct current internal resistance and thickness swelling rate of the lithium-ion battery can be further decreased, and the safety of the lithium-ion battery can be improved.

When the area ratio A of the intermediate layer to the active material layer and the percentage Y% of the sulfur-oxygen double bond-containing compound in the electrolyte satisfy $0.009 \leq A \times Y \leq 6$, the direct current internal resistance and the thickness swelling rate of the lithium-ion battery can be further decreased, and the safety of the lithium-ion battery can be improved.

Table 2 shows the influence of the average particle size of the conductive material, the specific surface area X $m^2/g$, and the relationship between the two and the percentage of Y% of the sulfur-oxygen double bond-containing compound in the electrolyte on the direct current internal resistance and the thickness swelling rate of the lithium-ion battery. Examples 2-1 to 2-12 differ from Example 1-1 only in the parameters listed in Table 2.

**Table 2**

| | Material | Particle size (μm) | X ($m^2$/g) | Y (%) | X× Y | Direct current internal resistance (mΩ) | Thickness swelling rate |
|---|---|---|---|---|---|---|---|
| Example 1-1 | CNT | 1.1 | 10 | 1 | 10 | 185 | 135% |
| Example 2-1 | CNT | 0.8 | 50 | 1 | 50 | 163 | 105% |
| Example 2-2 | Carbon black | 0.8 | 40 | 1 | 40 | 175 | 123% |
| Example 2-3 | Carbon fiber | 0.8 | 30 | 1 | 30 | 167 | 117% |
| Example 2-4 | CNT | 0.5 | 100 | 1 | 100 | 151 | 101% |
| Example 2-5 | Carbon black | 2 | 40 | 2 | 80 | 191 | 152% |
| Example 2-6 | Carbon black | 0.8 | 20 | 0.8 | 16 | 181 | 132% |
| Example 2-7 | Carbon black | 0.8 | 300 | 0.8 | 240 | 190 | 159% |
| Example 2-8 | Carbon black | 0.8 | 400 | 0.8 | 320 | 197 | 162% |
| Example 2-9 | Carbon black | 0.005 | 20 | 0.005 | 0.1 | 188 | 179% |
| Example 2-10 | Carbon black | 0.005 | 40 | 0.005 | 0.2 | 165 | 133% |
| Example 2-11 | Carbon black | 0.8 | 250 | 0.8 | 200 | 168 | 130% |
| Example 2-12 | Carbon black | 1 | 250 | 1 | 250 | 191 | 186% |

The results show that the conductive material can have the following characteristics: the average particle size is below 1 μm, the specific surface area falls in the range of 20 $m^2/g$ to 300 $m^2/g$, and the specific surface area X $m^2/g$ and the percentage Y% of the sulfur-oxygen double bond-containing compound in the electrolyte satisfy $0.2 \leq X \times Y \leq 200$.

When the conductive material has at least one of the preceding characteristics, the direct current internal resistance and thickness swelling rate of the lithium-ion battery can be further decreased, and the safety of the lithium-ion battery can be improved.

Table 3 further shows the influence of the negative electrode active material on the direct current internal resistance and the thickness swelling rate of the lithium-ion battery. Examples 3-1 to 3-5 differ from Example 1-1 only in the parameters listed in Table 3.

**Table 3**

| | Negative electrode active material | Direct current internal resistance (mΩ) | Thickness swelling rate |
|---|---|---|---|
| Example 1-1 | Artificial graphite | 185 | 135% |
| Example 3-1 | 80% artificial graphite + 20% natural graphite | 175 | 125% |
| Example 3-2 | Mesophase carbon microsphere | 165 | 115% |
| Example 3-3 | 80% artificial graphite + 20% silicon carbide | 135 | 111% |
| Example 3-4 | 80% artificial graphite + 20% silicon oxide | 125 | 105% |
| Example 3-5 | 80% artificial graphite + 20% hard carbon | 115 | 124% |

The results show that adjustment can further decrease the negative electrode active material, the direct current internal resistance and thickness swelling rate of the lithium-ion battery and improve the safety of the lithium-ion battery. When the negative electrode active material contains silicon material or hard carbon, the direct current internal resistance and the thickness swelling rate of the lithium-ion battery are particularly significantly decreased.

Table 4 further shows the influence of the positive electrode active material on the direct current internal resistance and the thickness swelling rate of the lithium-ion battery. Examples 4-1 to 4-5 differ from Example 1-1 only in the parameters listed in Table 4.

**Table 4**

| | Positive electrode active material | Direct current internal resistance (mΩ) | Thickness swelling rate |
|---|---|---|---|
| Example 1-1 | Lithium cobalt oxide | 185 | 135% |
| Example 4-1 | 80% lithium cobaltate + 20% NCM(532) | 135 | 95% |
| Example 4-2 | NCM(532) | 113 | 89% |
| Example 4-3 | 80% NCM(532) + 20% lithium manganate | 106 | 91% |
| Example 4-4 | Lithium iron phosphate | 117 | 95% |
| Example 4-5 | 80% lithium iron phosphate+ 20% lithium manganese iron phosphate | 112 | 84% |

The results show that adjustment the positive electrode active material can further decrease the direct current internal resistance and thickness swelling rate of the lithium-ion battery and improve the safety of the lithium-ion battery.

Table 5 shows the influence of the electrolyte composition on the direct current internal resistance and the thickness swelling rate of the lithium-ion battery. Examples 5-1 to 5-31 differ from Example 1-1 only in the parameters listed in Table 5.

**Table 5**

| | Propionate (20%) | Organic compound having the cyano group (2%) | $LiPO_2F_2$ (0.5%) | Compound of formula 2 (0.5%) | Direct current internal resistance (mΩ) | Thickness swelling rate |
|---|---|---|---|---|---|---|
| Example 1-1 | / | / | / | / | 185 | 135% |
| Example 5-1 | PP | / | / | / | 118 | 95% |
| Example 5-2 | EP | / | / | / | 112 | 94% |
| Example 5-3 | / | ADN | / | / | 102 | 95% |
| Example 5-4 | / | SN | / | / | 101 | 93% |
| Example 5-5 | / | HTCN | / | / | 98 | 92% |
| Example 5-6 | / | EDN | / | / | 96 | 90% |
| Example 5-7 | / | TCEP | / | / | 95 | 89% |
| Example 5-8 | / | / | $LiPO_2F_2$ | / | 104 | 87% |
| Example 5-9 | / | / | / | Formula 2-1 | 95 | 88% |
| Example 5-10 | / | / | / | Formula 2-2 | 99 | 89% |
| Example 5-11 | / | / | $LiPO_2F_2$ | Formula 2-1 | 89 | 86% |
| Example 5-12 | PP | ADN | / | / | 88 | 81% |
| Example 5-13 | PP | SN | / | / | 85 | 83% |
| Example 5-14 | PP | HTCN | / | / | 83 | 80% |
| Example 5-15 | PP | EDN | / | / | 82 | 78% |

| | Propionate (20%) | Organic compound having the cyano group (2%) | $LiPO_2F_2$ (0.5%) | Compound of formula 2 (0.5%) | Direct current internal resistance (mΩ) | Thickness swelling rate |
|---|---|---|---|---|---|---|
| Example 5-16 | PP | TCEP | / | / | 81 | 75% |
| Example 5-17 | PP | / | $LiPO_2F_2$ | / | 79 | 67% |
| Example 5-18 | PP | / | / | Formula 2-1 | 76 | 68% |
| Example 5-19 | PP | / | / | Formula 2-2 | 75 | 65% |
| Example 5-20 | PP | / | $LiPO_2F_2$ | Formula 2-1 | 72 | 61% |
| Example 5-21 | / | HTCN | $LiPO_2F_2$ | / | 73 | 62% |
| Example 5-22 | / | HTCN | / | Formula 2-1 | 72 | 63% |
| Example 5-23 | / | HTCN | / | Formula 2-2 | 71 | 65% |
| Example 5-24 | / | HTCN | $LiPO_2F_2$ | Formula 2-1 | 70 | 61% |
| Example 5-25 | / | TCEP | / | Formula 2-1 | 72 | 60% |
| Example 5-26 | / | TCEP | / | Formula 2-2 | 73 | 58% |
| Example 5-27 | / | TCEP | $LiPO_2F_2$ | Formula 2-1 | 70 | 55% |
| Example 5-28 | PP | TCEP | $LiPO_2F_2$ | / | 68 | 52% |
| Example 5-29 | PP | TCEP | / | Formula 2-1 | 66 | 50% |
| Example 5-30 | PP | HTCN | $LiPO_2F_2$ | Formula 2-1 | 57 | 45% |
| Example 5-31 | PP | TCEP | $LiPO_2F_2$ | Formula 2-2 | 52 | 42% |

"-" means no addition or not having such property.

The results show that on the basis that the area ratio of the intermediate layer to the active material layer falls in the range of 0.9 to 1.1 and the electrolyte contains the sulfur-oxygen double bond-containing compound, when the electrolyte contains propionate, organic compound having the cyano group, lithium difluorophosphate and/or the compound of formula 2, the direct current internal resistance and the thickness swelling rate of the lithium-ion battery can be further decreased, and the safety of the lithium-ion battery can be improved.

Table 6 shows the influence of the relationship between the percentage of Y% of the sulfur-oxygen double bond-containing compound and the percentage b% of the lithium difluorophosphate in the electrolyte on the direct current internal resistance and the thickness swelling rate of the lithium-ion battery. Examples 6-1 to 6-11 differ from Example 1-1 only in the parameters listed in Table 6.

**Table 6**

| | b (%) | Sulfur-oxygen double bond-containing compound | | Y/b | Direct current internal resistance (mΩ) | Thickness swelling rate |
|---|---|---|---|---|---|---|
| | | Type | Percentage Y (%) | | | |
| Example 1-1 | 0 | PS | 1 | ∞ | 185 | 135% |
| Example 6-1 | 0.5 | PS | 1 | 2 | 104 | 87% |
| Example 6-2 | 0.5 | PS | 2 | 4 | 93 | 67% |
| Example 6-3 | 0.5 | PS | 3 | 6 | 88 | 58% |
| Example 6-4 | 0.5 | PS | 5 | 10 | 81 | 55% |
| Example 6-5 | 1 | PS | 0.01 | 0.01 | 99 | 108% |
| Example 6-6 | 0.01 | PS | 3 | 300 | 118 | 114% |
| Example 6-7 | 2 | PS | 0.01 | 0.005 | 189 | 138% |
| Example 6-8 | 0.01 | PS | 5 | 500 | 158 | 134% |
| Example 6-9 | 2.2 | PS | 0.01 | 0.0045 | 196 | 141% |
| Example 6-10 | 0.005 | PS | 5 | 1000 | 187 | 139% |
| Example 6-11 | 0.05 | PS | 5 | 100 | 107 | 109% |

The results show that when the percentage of the lithium difluorophosphate in the electrolyte ranges from 0.01% to 2%, the direct current internal resistance and thickness swelling rate of the lithium-ion battery can be further decreased, and the safety of the lithium-ion battery can be improved.

When the percentage Y% of the sulfur-oxygen double bond-containing compound and the percentage b% of the lithium difluorophosphate in the electrolyte further satisfy $0.01 \leq Y/b \leq 100$, the direct current internal resistance and thickness swelling rate of the lithium-ion battery can be further decreased, and the safety of the lithium-ion battery can be improved.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Accordingly, descriptions appearing in the specification, such as "in some embodiments", "in the embodiments", "in an

embodiment", "in another example", "in an example", "in a particular example", or "for example", are not necessarily references to the same embodiments or examples in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical apparatus, comprising an electrode and an electrolyte, wherein the electrode comprises a current collector, an intermediate layer disposed on the current collector, and an active material layer disposed on the intermediate layer;

    an area ratio A of the intermediate layer to the active material layer ranges from 0.9 to 1.1; and
    the electrolyte comprises a sulfur-oxygen double bond-containing compound.

2. The electrochemical apparatus according to claim 1, wherein the intermediate layer comprises a conductive material, and an average particle size of the conductive material is less than 1 μm.

3. The electrochemical apparatus according to claim 2, wherein the conductive material comprises at least one of carbon black, carbon fiber, graphene, or carbon nanotube.

4. The electrochemical apparatus according to claim 2, wherein a specific surface area of the conductive material is X $m^2/g$, and X falls in the range of 20 to 300.

5. The electrochemical apparatus according to claim 1, wherein based on weight of the electrolyte, a percentage of the sulfur-oxygen double bond-containing compound is Y%, and Y falls in the range of 0.01 to 10.

6. The electrochemical apparatus according to claim 5, wherein A and Y satisfy $0.009 \le A \times Y \le 6$.

7. The electrochemical apparatus according to claim 4, wherein based on weight of the electrolyte, a percentage of the sulfur-oxygen double bond-containing compound is Y%, Y falls in the range of 0.01 to 10, and $0.2 \le X \times Y \le 200$.

8. The electrochemical apparatus according to claim 1, wherein the sulfur-oxygen double bond-containing compound comprises at least one of the following compounds: cyclic sulfate, chain sulfate, chain sulfonate, cyclic sulfonate, chain sulfite, or cyclic sulfite.

9. The electrochemical apparatus according to claim 1, wherein the sulfur-oxygen double bond-containing compound comprises the compound of formula 1:

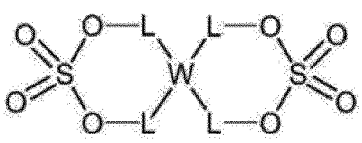

formula 1

wherein

W is selected from

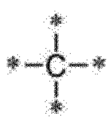 , 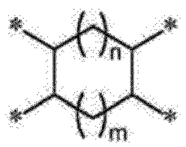 , 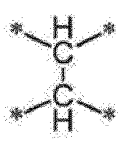 ,

or

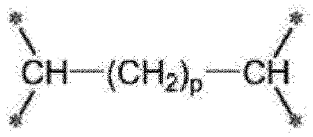

;

L is selected from a single bond or methylene, and two Ls in a same ring structure are not single bonds at the same time;
m is 1, 2, 3, or 4.
n is 0, 1, or 2; and
p is 0, 1, 2, 3, 4, 5, or 6.

**10.** The electrochemical apparatus according to claim 9, wherein the compound of formula 1 comprises at least one of the following:

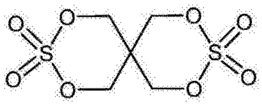

formula 1-1,

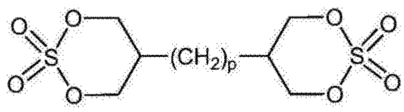

formula 1-2,

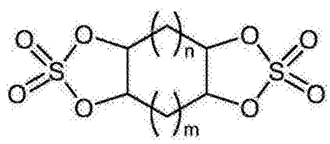

formula 1-3,

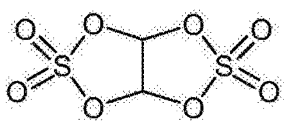

formula 1-4,

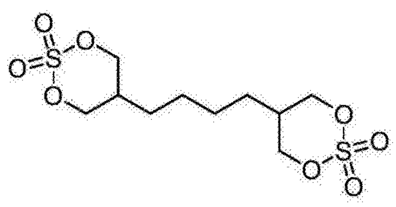

formula 1-5,

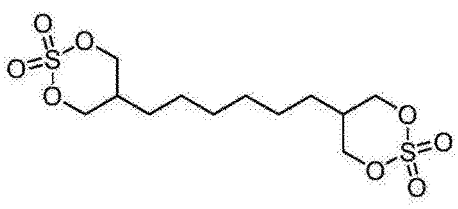

formula 1-6,

or

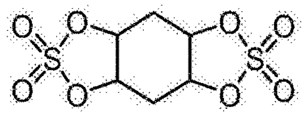 formula 1-7.

**11.** The electrochemical apparatus according to claim 1, wherein the electrolyte further comprises at least one of the following compounds:

(a) propionate;
(b) organic compound having the cyano group
(c) lithium difluorophosphate; and
(d) compound of formula 2:

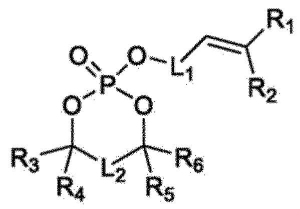 formula 2

wherein

$R^1$, $R^2$, $R^3$, $R^4$, $R^5$, and $R^6$ each are independently hydrogen or $C_1$-$C_{10}$ alkyl group; and
$L_1$ and $L_2$ each are independently $-(CR^7R^8)_n-$;
$R^7$ and $R^8$ each are independently hydrogen or $C_1$-$C_{10}$ alkyl group; and
n is 1, 2, or 3.

**12.** The electrochemical apparatus according to claim 11, wherein the compound of formula 2 comprises at least one of the following compounds:

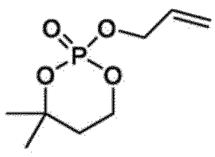 formula 2-1, 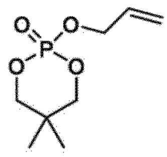 formula 2-2,

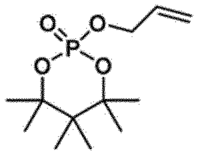 formula 2-3, 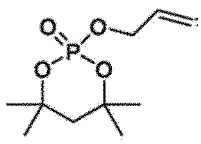 formula 2-4,

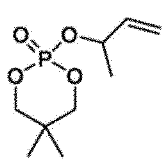 formula 2-5, or 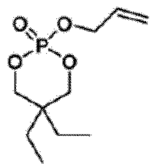 formula 2-6.

**13.** The electrochemical apparatus according to claim 11, wherein based on weight of the electrolyte, a percentage of the propionate falls in the range of 10% to 60%.

**14.** The electrochemical apparatus according to claim 11, wherein based on weight of the electrolyte, a percentage of the propionate is b%, and b falls in the range of 0.01 to 2.

**15.** The electrochemical apparatus according to claim 14, wherein based on the weight of the electrolyte, a percentage of the sulfur-oxygen double bond-containing compound is Y%, Y falls in the range of 0.01 to 10, and $0.01 \leq Y/b \leq 100$.

**16.** An electronic apparatus, comprising the electrochemical apparatus according to any one of claims 1 to 15.

**INTERNATIONAL SEARCH REPORT**

International application No.
**PCT/CN2020/121055**

**A. CLASSIFICATION OF SUBJECT MATTER**

H01M 10/0525(2010.01)i; H01M 4/13(2010.01)i; H01M 10/0567(2010.01)i; H01M 10/42(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC, STN: 宁德新能源科技有限公司, 王可飞, 韩冬冬, 郭俊, 刘胜奇, 电化学, 电池, 电极, 电解液, 电解质, 集流体, 导电, 直流内阻, 硫酸酯, 磺酸酯, electrochemi+, electrolyt+, electrode?, sulfonate?, sulfate

**C. DOCUMENTS CONSIDERED TO BE RELEVANT**

| Category* | Citation of document, with indication, where appropriate, of the relevant passages | Relevant to claim No. |
|---|---|---|
| X | CN 111129498 A (NINGDE AMPEREX TECHNOLOGY LTD.) 08 May 2020 (2020-05-08) description paragraphs [0006]-[0045], [0164]-[0196] | 1-10, 16 |
| Y | CN 111129498 A (NINGDE AMPEREX TECHNOLOGY LTD.) 08 May 2020 (2020-05-08) description paragraphs [0006]-[0045], [0164]-[0196] | 11-15 |
| Y | CN 111082138 A (SK INNOVATION CO., LTD.) 28 April 2020 (2020-04-28) description paragraphs [0018]-[0049] | 11-15 |
| A | CN 106252710 A (SK INNOVATION CO., LTD.) 21 December 2016 (2016-12-21) entire document | 1-16 |
| A | CN 105470571 A (CONTEMPORARY AMPEREX TECHNOLOGY LTD.) 06 April 2016 (2016-04-06) entire document | 1-16 |
| A | CN 110660962 A (CONTEMPORARY AMPEREX TECHNOLOGY LTD.) 07 January 2020 (2020-01-07) entire document | 1-16 |
| A | CN 110661027 A (CONTEMPORARY AMPEREX TECHNOLOGY LTD.) 07 January 2020 (2020-01-07) entire document | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2021** | **25 June 2021** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/121055**

**C. DOCUMENTS CONSIDERED TO BE RELEVANT**

| Category* | Citation of document, with indication, where appropriate, of the relevant passages | Relevant to claim No. |
|---|---|---|
| A | CN 111285884 A (ZHANGJIAGANG GUOTAI-HUARONG NEW CHEMICAL MATERIALS CO., LTD.) 16 June 2020 (2020-06-16) entire document | 1-16 |
| A | CN 110931869 A (GUANGZHOU TINCI MATERIALS TECHNOLOGY CO., LTD.) 27 March 2020 (2020-03-27) entire document | 1-16 |
| A | JP 2018520480 A (SK CHEM CO., LTD.) 26 July 2018 (2018-07-26) entire document | 1-16 |

Form PCT/ISA/210 (second sheet) (January 2015)

**INTERNATIONAL SEARCH REPORT**
**Information on patent family members**

International application No.
**PCT/CN2020/121055**

| Patent document cited in search report | | | Publication date (day/month/year) | Patent family member(s) | | | Publication date (day/month/year) |
|---|---|---|---|---|---|---|---|
| CN | 111129498 | A | 08 May 2020 | None | | | |
| CN | 111082138 | A | 28 April 2020 | US | 2020127333 | A1 | 23 April 2020 |
| | | | | KR | 20200044539 | A | 29 April 2020 |
| CN | 106252710 | A | 21 December 2016 | US | 2016359196 | A1 | 08 December 2016 |
| | | | | CN | 106252710 | B | 26 February 2021 |
| | | | | KR | 20160144123 | A | 16 December 2016 |
| | | | | US | 10141608 | B2 | 27 November 2018 |
| | | | | US | 2019067741 | A1 | 28 February 2019 |
| CN | 105470571 | A | 06 April 2016 | CN | 105470571 | B | 26 October 2018 |
| CN | 110660962 | A | 07 January 2020 | CN | 110660962 | B | 02 February 2021 |
| CN | 110661027 | A | 07 January 2020 | None | | | |
| CN | 111285884 | A | 16 June 2020 | None | | | |
| CN | 110931869 | A | 27 March 2020 | None | | | |
| JP | 2018520480 | A | 26 July 2018 | JP | 6735777 | B2 | 05 August 2020 |
| | | | | KR | 20170009772 | A | 25 January 2017 |
| | | | | WO | 2017010820 | A1 | 19 January 2017 |

Form PCT/ISA/210 (patent family annex) (January 2015)